# EUROPEAN PATENT SPECIFICATION

(11) **EP 2 827 714 B1**
(45) Date of publication and mention of the grant of the patent: **07.08.2019**
(21) Application number: 13764576.8
(22) Date of filing: 14.03.2013
(51) Int. Cl.: A01N 25/04, A01N 39/04, A01N 57/20, A01P 13/00

(54) **TANKMIX ADDITIVE CONCENTRATES CONTAINING TRIGLYCERIDE FATTY ACID ESTERS AND METHODS OF USE**
TANKMISCHUNGSADDITIV-KONZENTRATE MIT TRIGLYCERID-FETTSÄUREESTERN UND VERFAHREN ZUR VERWENDUNG
CONCENTRÉS D'ADDITIFS DE MÉLANGE EN CUVE CONTENANT DES ESTERS D'ACIDE GRAS DE TRIGLYCÉRIDE ET PROCÉDÉS D'UTILISATION

(30) Priority: 23.03.2012 US 201261614663 P
(43) Date of publication of application: 28.01.2015
(73) Proprietor: Dow AgroSciences LLC, Indianapolis, IN 46268-1054 (US)
(72) Inventor: SHAO, Hui, Carmel, IN 46074 (US); TANK, Holger, Zionsville, IN 46077 (US)
(74) Representative: f & e patent
(86) International application number: PCT/US2013/031450
(87) International publication number: WO 2013/142262

(56) References cited:
- CN-A- 101 785 457
- US-A- 5 035 741
- US-A- 5 382 381
- US-A- 5 580 567
- US-A1- 2005 085 392
- US-A1- 2006 165 748
- US-A1- 2011 301 033
- "MATERIAL SAFETY DATA SHEET SPRAY-SURE BIOTROL OIL VEGETABLE OIL CONCENTRATE 1. IDENTIFICATION OF THE SUBSTANCE/PREPARATION AND THE COMPANY/UNDERTAKING", , 23 October 2006 (2006-10-23), XP055232076, Retrieved from the Internet: URL:http://profeng.com.au/PDFs/MSDS/Spray- Sure Biotrol - MSDS - 23-10-2006.pdf [retrieved on 2015-11-27]
- "93:7 SPRAY ADJUVANT CAUTION", Liters) MANUFACTURED FOR HELENA CHEMICAL COMPANY 225 SCHILLING BOULEVARD, SUITE 300 COLLIERVILLE, TN 38017 PRECAUTIONARY STATEMENTS, 1 January 2010 (2010-01-01), XP055232174, Retrieved from the Internet: URL:http://www.herbicide-adjuvants.com/Adj uvant_Labels/Helena Chemical Co/SOYDEX PLUS.pdf [retrieved on 2015-11-30]
- - - - - - - - - - - - - - - - - - -: "Adjuvants - Technical guide", , 1 January 2010 (2010-01-01), pages 1-48, XP055232486, Retrieved from the Internet: URL:http://www.unitedsuppliers.com/LinkCli ck.aspx?fileticket=GwJp8Sv3l3o=&tabid=80 [retrieved on 2015-12-01]
- "Adjuvants - Oils, surfactants and other additives for farm chemicals", , 1 December 2011 (2011-12-01), pages 1-52, XP055232046, Retrieved from the Internet: URL:https://www.grdc.com.au/~/media/7B1FA5 27DC2D45DE96C89FD0B61C941C.pdf [retrieved on 2015-11-27]
- MITHILA ET AL.: 'Evolution of Resistance to Auxinic Herbicides: Historical Perspectives, Mechanisms of Resistance, and Implications for Broadleaf Weed Management in Agronomic Crops' WEED SCIENCE vol. 59, 2011, pages 445 - 457, XP055166400

## Description

### BACKGROUND

Agricultural spraying by economical and available technologies uses hydraulic spray nozzles that inherently produce a wide spectrum of spray droplet sizes. The potential for these spray droplets to drift from the initial, desired site of application is found to be a function of droplet size, with smaller droplets having a higher propensity for off-target movement. Significant research efforts, involving numerous field trials, wind tunnel tests and subsequent generation of predictive math models have led to a greatly enhanced understanding of the relationship between spray droplet size and potential for off-target drift. Although other factors such as meteorological conditions and spray boom height contribute to the potential for drift, spray droplet size distribution has been found to be a predominant factor. Teske et. al. (Teske M. E., Hewitt A. J., Valcore, D. L. 2004. The Role of Small Droplets in Classifying Drop Size Distributions ILASS Americas 17th Annual Conference: Arlington VA) have reported a value of <156 microns (µm) as the fraction of the spray droplet distribution that contributes to drift. Robert Wolf (Wolf, R. E., Minimizing Spray Drift, December 15, 1997, Microsoft® PowerPoint Presentation, available at www.bae.ksu.edu/faculty/wolf/drift.htm, *last viewed* January 26, 2012) cites a value of <200 µm as the driftable fraction. A good estimation of droplet size likely to contribute to drift, therefore, is the fraction below about 150 µm.

Spray adjuvant composition comprising a vegetable oil or a derivative thereof and a buffering agent are described in US 5,580,567 to Helena Chemical Company, and the spray adjuvant SOY-DEX PLUS has been commercially available from said company.

The negative consequences of off-target movement can be quite pronounced. Some herbicides have demonstrated very sensitive phytotoxicity to particular plant species at extremely low parts per million (ppm) or even parts per billion (ppb) levels, resulting in restricted applications around sensitive crops, orchards, and residential plantings. For example, the California Dept of Pesticide Regulation imposes buffers of ½ - 2 miles for propanil containing herbicides applied aerially in the San Joaquin valley.

### SUMMARY

The methods and compositions described herein include tankmix additive concentrates containing a phosphate ester and polymeric surfactant, and a triglyceride fatty acid ester and the use of aqueous pesticide spray mixtures incorporating such tankmix additive concentrates as defined in the claims. The tankmix additive concentrates described herein include from 1 to 50 weight percent of the mixture of a phosphate ester surfactant and a polymeric surfactant further defined in claim 1, and from 1 to 90 weight percent of a triglyceride fatty acid ester of Formula III: 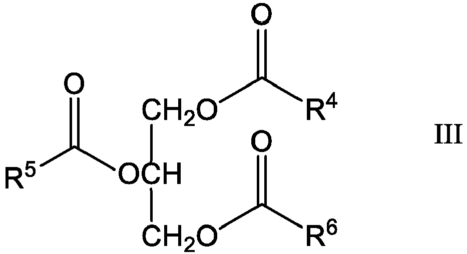 In Formula III, R⁴, R⁵, and R⁶ independently represent saturated or unsaturated (C₆-C₂₁) alkyls. These tankmix additive concentrates form a stable emulsion upon dilution into a pesticide spray mixture. The methods for reducing spray drift during pesticide spray application include providing a tankmix additive concentrate as described, adding the tankmix additive concentrate to a spray tank containing the pesticide spray mixture to form a stable emulsion, and spraying the stable emulsion.

### DETAILED DESCRIPTION

Methods and tankmix additive concentrate compositions to reduce spray drift are described herein. The methods and tankmix additive concentrate compositions reduce the amount of driftable fines of spray solutions in both aerial and ground spray applications. The methods include the use of tankmix additive concentrates incorporating a phosphate ester and polymeric surfactant and a triglyceride fatty acid ester.

The surfactants used in the tankmix additive concentrates described herein are mixtures of phosphate ester surfactants and polymeric surfactants, or mixtures thereof which may be anionic or nonionic in character. The surfactants include ABA block copolymers; polyvinyl alcohol resins; block or graft acrylate or methacrylate copolymers; alkyd polyethylene oxide resins; AB block copolymers containing EO and PO blocks, for example ethylene oxide-propylene oxide (EO-PO) block copolymers; acids or salts of mono and dialkyl phosphate esters; acids or salts of ethoxylated mono and dialkyl phosphate esters; acids or salts of mono and dialkyl phosphate esters of ethoxylated tristyrylphenol; acids or salts of mono and dialkyl phosphate esters of ethoxylated phenol; ethoxylated alkylphenols; and mixtures thereof.

Examples of useful phosphate ester surfactants include: Atlox™ DP13/6, Cresplus™ 1209, Crodafos™ 810A, Crodafos™ 810D, Crodafos™ CO5A, Crodafos™ CS2A, Crodafos™ D4A, Crodafos™ G26A, Crodafos™ O10A, Crodafos™ O3A, Multitrope 1214, Crodafos™ T5A, and Crodafos™ T6A (all from Croda; Edison, NJ), Cedephos FA-600, Petrostep® PE-70T, Polystep® P-12A, Polystep® P-33, Polystep® TSP-16PE, Stepan® MWA-311, Stepfac 8170, Stepfac 8171, Stepfac 8173, Stepfac 8175, Stepfac 8180, Stepfac 8181, Stepfac TSP-PE, Stepfac TSP-PE-K, Stepfac TSP-PE-N, Zelec® AN and Zelec® LA-2 (all from Stepan; Northfield, IL), Klearfac® AA 270, Maphos® 58, Maphos® 60 A, Maphos® 66 H, Maphos® M 60, Agnique® PE 2EH-2k, Agnique® PE NP-4, Agnique® PE NP-6, Agnique® PE NP-9, Agnique® PE DNP-8, Agnique® PE IDA-6, Agnique® PE TDA-6, Agnique® PE 25, Agnique® PE 28, Agnique® PE 28-9N and Agnique® PE 68-5 (all from BASF; Florham Park, NJ), Duraphos 100, Duraphos 178, Lubrhophos LB 400, Lubrhophos LB/400-E, Lubrhophos LP/700 E, Lubrhophos RD/510-E, Rhodafac® AAP, Rhodafac® BN-936/S, Rhodafac® HA70, Rhodafac® LO-11/ALA, Rhodafac® LO/529-E, Rhodafac® PA 15, Rhodafac® PA 23, Rhodafac® PA 35, Rhodafac® PA/32, Rhodafac® PE 510, Rhodafac® RM 710, Rhodafac® RM/510-E, Rhodafac® RS 410, Rhodafac® RS 610-E, Rhodafac® RS 710, Rhodafac® RS-610/A25, Rhodafac® RS/710-E, Soprophor® 3 D 33, Trimethyl Phosphite HP and Trimethyl Phosphite (all from Rhodia; Cranberry, NJ), and the SURFONIC® PE series and the EMPIPHOS® series (both from Huntsman International LLC; The Woodlands, TX). The phosphate ester surfactant can be present in an amount from 1 g/kg to 500 g/kg, preferably from 1 g/kg to 200 g/kg of the total composition.

Examples of useful polymeric surfactants include: (1) ABA block copolymers having a hydrophilic portion of polyethylene oxide and a hydrophobic portion of poly(12-hydroxystearate), for example, Atlox™ 4912 (Croda; Edison, NJ), having a molecular weight of about 5,000 and Termul™ 2510 (Huntsman International LLC; The Woodlands, TX); (2) polyvinyl alcohol resins with a degree of hydrolysis of 86-89%, for example, Gohsenol GL03 and Gohsenol GL05 (The Nippon Synthetic Chemical Industry Co., Ltd.; Osaka, Japan); (3) methyl methacrylate graft copolymers, for example, Atlox™ 4913 (Croda; Edison, NJ); (4) alkyd polyethylene oxide resins, for example, Atlox™ 4914 (Croda; Edison, NJ) ; (5) EO-PO block copolymers, for example, Atlas™ G-5000 (Croda; Edison, NJ), and the Pluronic® block copolymers (BASF; Florham Park, NJ). Especially useful polymeric surfactants include the ABA block copolymers and EO-PO block copolymers. The polymeric surfactant can be present in an amount from 1 g/kg to 200 g/kg, preferably from 1 g/kg to 50 g/kg of the total composition.

As used herein the term triglyceride fatty acid ester refers to a triglyceride fatty acid ester of Formula III: 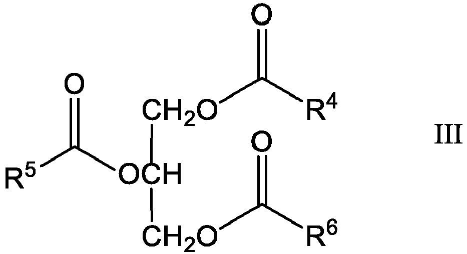 Where R⁴, R⁵, and R⁶ independently represent saturated or unsaturated straight or branched chain (C₆-C₂₁) alkyls. The tankmix additive concentrates as described herein include from 1 to 50 weight percent of a mixture of a phosphate ester surfactant and a polymeric surfactant; and from 1 to 90 weight percent of the triglyceride fatty acid esters described herein. The tankmix additive concentrates described herein form a stable emulsion upon dilution into a pesticide spray mixture.

Triglyceride fatty acid esters useful with the methods and tankmix additive concentrates described herein may be derived from or made from plant, or animal sources and include, for example, vegetable oils, seed oils, or animal oils. Examples of triglyceride fatty acid esters useful with the methods and tankmix additive concentrates described herein include vegetable or a seed oils selected from almond oil, soybean oil, rape seed oil, olive oil, castor oil, sunflower seed oil, canola oil, coconut oil, corn oil, cotton seed oil, linseed oil, palm oil, peanut oil, safflower oil, sesame oil, tung oil, and mixtures thereof.

The methods and tankmix additive concentrates described herein are useful with pesticide spray mixtures containing pesticides and other ingredients such as herbicides, insecticides, herbicide safeners, and/or fungicides. The pesticide spray mixtures disclosed herein may be applied for the control of unwanted plants, fungi, or insects at levels dependent on the concentration of the active ingredient needed to control the target pest.

Examples of herbicides useful with the methods and tankmix additive concentrates described herein include one or more of 4-CPA, 4-CPB, 4-CPP, 2,4-D, 3,4-DA, 2,4-DB, 3,4-DB, 2,4-DEB, 2,4-DEP, 3,4-DP, 2,4,5-T, 2,4,5-TB, 2,3,6-TBA, allidochlor, acetochlor, acifluorfen, aclonifen, alachlor, alloxydim, alorac, ametridione, ametryn, amibuzin, amicarbazone, amidosulfuron, aminocyclopyrachlor, aminopyralid, aminopyralid, amiprofos-methyl, amitrole, anilofos, anisuron, asulam, asulam, atraton, atrazine, azafenidin, azimsulfuron, aziprotryne, barban, BCPC, beflubutamid, benazolin, bencarbazone, benfluralin, benfuresate, bensulfuron, bensulide, bentazone, benzadox, benzfendizone, benzipram, benzobicyclon, benzofenap, benzofluor, benzoylprop, benzthiazuron, bicylopyrone, bifenox, bilanafos, bilanafos, bispyribac, bromacil, bromobonil, bromobutide, bromofenoxim, bromoxynil, brompyrazon, butachlor, butafenacil, butamifos, butenachlor, buthidazole, buthiuron, butralin, butroxydim, buturon, butylate, cafenstrole, cafenstrole, cambendichlor, carbasulam, carbasulam, carbetamide, carboxazole chlorprocarb, carfentrazone, CDEA, CEPC, chlomethoxyfen, chloramben, chloranocryl, chlorazifop, chlorazine, chlorbromuron, chlorbufam, chloreturon, chlorfenac, chlorfenprop, chlorflurazole, chlorflurenol, chloridazon, chlorimuron, chlornitrofen, chloropon, chlorotoluron, chloroxuron, chloroxynil, chlorpropham, chlorsulfuron, chlorthal, chlorthiamid, cinidon-ethyl, cinmethylin, cinosulfuron, cisanilide, clethodim, cliodinate, clodinafop, clofop, clomazone, clomeprop, clomeprop, cloprop, cloproxydim, clopyralid, clopyralid, cloransulam, CPMF, CPPC, credazine, cumyluron, cyanatryn, cyanazine, cycloate, cyclosulfamuron, cycloxydim, cycluron, cyhalofop, cyperquat, cyprazine, cyprazole, cypromid, daimuron, dalapon, dazomet, delachlor, desmedipham, desmetryn, di-allate, dicamba, dichlobenil, dichloralurea, dichlormate, dichlorprop, dichlorprop-P, diclofop, diclosulam, diethamquat, diethatyl, difenopenten, difenoxuron, difenzoquat, diflufenican, diflufenzopyr, dimefuron, dimepiperate, dimethachlor, dimethametryn, dimethenamid, dimethenamid-P, dimexano, dimidazon, dinitramine, dinitramine, dinofenate, dinoprop, dinosam, dinoseb, dinoterb, diphenamid, dipropetryn, diquat, disul, dithiopyr, diuron, DMPA, DNOC, EBEP, eglinazine, endothal, epronaz, epronaz, EPTC, erbon, esprocarb, ethalfluralin, ethametsulfuron, ethidimuron, ethiolate, ethofumesate, ethoxyfen, ethoxysulfuron, etinofen, etnipromid, etnipromid, etnipromid, etobenzanid, EXD, fenasulam, fenasulam, fenasulam, fenoprop, fenoxaprop, fenoxaprop-P, fenoxasulfone, fenteracol, fenthiaprop, fentrazamide, fenuron, flamprop, flamprop-M, flazasulfuron, florasulam, fluazifop, fluazifop-P, fluazolate, flucarbazone, flucetosulfuron, fluchloralin, flufenacet, flufenican, flufenpyr, flumetsulam, flumezin, flumiclorac, flumioxazin, flumipropyn, fluometuron, fluorodifen, fluoroglycofen, fluoromidine, fluoronitrofen, fluothiuron, flupoxam, flupoxam, flupropacil, flupropanate, flupyrsulfuron, fluridone, flurochloridone, fluroxypyr, flurtamone, fluthiacet, fomesafen, fomesafen, foramsulfuron, fosamine, furyloxyfen, glufosinate, glyphosate, halauxifen, halosafen, halosafen, halosulfuron, haloxydine, haloxyfop, haloxyfop-P, hexazinone, imazamethabenz, imazamox, imazapic, imazapyr, imazaquin, imazethapyr, imazosulfuron, indanofan, indaziflam, iodobonil, iodosulfuron, ioxynil, ipazine, ipfencarbazone, iprymidam, isocarbamid, isocil, isomethiozin, isonoruron, isopolinate, isopropalin, isoproturon, isouron, isoxaben, isoxachlortole, isoxaflutole, isoxapyrifop, karbutilate, ketospiradox, lactofen, lenacil, linuron, MCPA, MCPA-thioethyl, MCPB, mecoprop, mecoprop-P, medinoterb, mefenacet, mefluidide, mesoprazine, mesosulfuron, mesotrione, metam, metamifop, metamifop, metamitron, metazachlor, metazosulfuron, metflurazon, methabenzthiazuron, methalpropalin, methazole, methiobencarb, methiozolin, methiuron, methiuron, methometon, methoprotryne, methyldymron, metobenzuron, metobromuron, metolachlor, S-metolachlor, metosulam, metoxuron, metribuzin, metsulfuron, molinate, monalide, monisouron, monochloroacetic acid, monolinuron, monuron, morfamquat, naproanilide, napropamide, naptalam, neburon, nicosulfuron, nipyraclofen, nitralin, nitrofen, nitrofluorfen, norflurazon, noruron, OCH, orbencarb, orthosulfamuron, oryzalin, oryzalin, oxadiargyl, oxadiazon, oxapyrazon, oxasulfuron, oxaziclomefone, oxyfluorfen, parafluron, paraquat, pebulate, pelargonic acid, pendimethalin, penoxsulam, pentanochlor, pentoxazone, perfluidone, pethoxamid, phenisopham, phenmedipham, phenmedipham-ethyl, phenobenzuron, picloram, picloram, picolinafen, picolinafen, pinoxaden, piperophos, pretilachlor, primisulfuron, procyazine, prodiamine, prodiamine, profluazol, profluralin, profoxydim, proglinazine, prometon, prometryn, propachlor, propanil, propaquizafop, propazine, propham, propisochlor, propoxycarbazone, propyrisulfuron, propyzamide, prosulfalin, prosulfocarb, prosulfuron, proxan, prynachlor, pydanon, pyraclonil, pyraflufen, pyrasulfotole, pyrazolynate, pyrazosulfuron, pyrazoxyfen, pyribenzoxim, pyributicarb, pyriclor, pyridafol, pyridate, pyriftalid, pyriminobac, pyrimisulfan, pyrithiobac, pyroxasulfone, pyroxsulam, quinclorac, quinmerac, quinoclamine, quinonamid, quizalofop, quizalofop-P, rhodethanil, rimsulfuron, sebuthylazine, secbumeton, sethoxydim, siduron, simazine, simeton, simetryn, sulcotrione, sulfallate, sulfentrazone, sulfometuron, sulfosulfuron, sulglycapin, swep, tebutam, tebuthiuron, tefuryltrione, tembotrione, tepraloxydim, terbacil, terbucarb, terbuchlor, terbumeton, terbuthylazine, terbutryn, tetrafluron, thenylchlor, thiazafluron, thiazopyr and triclopyr, thidiazimin, thidiazuron, thidiazuron, thiencarbazone-methyl, thifensulfuron, thiobencarb, tiocarbazil, tioclorim, topramezone, tralkoxydim, tri-allate, triasulfuron, triaziflam, tribenuron, tricamba, tridiphane, trietazine, trifloxysulfuron, trifluralin, triflusulfuron, trifop, trifopsime, trihydroxytriazine, trimeturon, tripropindan, tritac, tritosulfuron, vernolate, xylachlor, and compounds of the following Formula 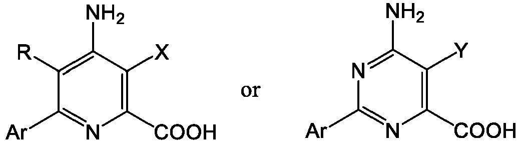 wherein Ar represents a phenyl group substituted with one to four substituents independently selected from halogen, C₁-C₆ alkyl, C₁-C₆ alkoxy, C₂-C₄ alkoxyalkyl, C₂-C₆ alkylcarbonyl, C₁-C₆ alkylthio, C₁-C₆ haloalkyl, C₁-C₆ haloalkoxy, C₂-C₄ haloalkoxyalkyl, C₂-C₆ haloalkylcarbonyl, C₁-C₆ haloalkylthio, -OCH₂CH₂-, -OCH₂CH₂CH₂-, -OCH₂O- or -OCH₂CH₂O-; R represents H or F; X represents Cl or vinyl; and Y represents Cl, vinyl or methoxy; and their salts and esters as disclosed, for example, in US7314849 B2, US7300907 B2, US7786044 B2 and US7642220 B2.

Suitable herbicides useful with the methods and tankmix additive concentrates described herein include auxinic herbicides, for example 2,4-D, 2,4-DB, aminocyclopyrachlor, aminopyralid, clopyralid, dicamba, fluroxypyr, halauxifen, MCPA, MCPB, picloram or triclopyr, acetochlor, atrazine, benfluralin, cloransulam, cyhalofop, diclosulam, dithiopyr, ethalfluralin, florasulam, flumetsulam, glufosinate, glyphosate, haloxyfop, isoxaben, MSMA, oryzalin, oxyfluorfen, pendimethalin, penoxsulam, propanil, pyroxsulam, quizalofop, tebuthiuron, trifluralin, and the compound of the Formula 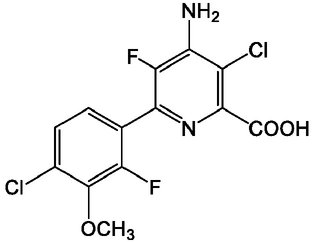 and its C₁-C₁₂ alkyl or C₇-C₁₂ arylalkyl ester or salt derivatives, for example, the benzyl ester.

Especially suitable herbicides useful with the methods and tankmix additive concentrates described herein include auxinic herbicides, for example, clopyralid, triclopyr, 2,4-D, 2,4-DB, MCPA, MCPB, aminocyclopyrachlor, dicamba, aminopyralid, picloram, or mixtures thereof. The methods for reducing spray drift during pesticide spray mixture application described herein are most particularly useful for the application of herbicides that are subject to restricted applications around sensitive crops such as spray mixtures containing glyphosate, 2,4-D, triclopyr, dicamba, or mixtures thereof.

Examples of insecticides useful with the methods and tankmix additive concentrates described herein include one or more of abamectin, acephate, acetamiprid, acethion, acetoprole, acrinathrin, alanycarb, aldicarb, aldoxycarb, allethrin, allosamidin, allyxycarb, amidithion, aminocarb, amiton, amitraz, anabasine, athidathion, azadirachtin, azamethiphos, azinphos-ethyl, azinphos-methyl, azothoate, barthrin, bendiocarb, benfuracarb, bensultap, bifenthrin, bioallethrin, bioethanomethrin, biopermethrin, bioresmethrin, bistrifluron, bromfenvinfos, bromophos, bromophos-ethyl, bufencarb, buprofezin, butacarb, butathiofos, butocarboxim, butonate, butoxycarboxim, cadusafos, carbanolate, carbaryl, carbofuran, carbophenothion, carbosulfan, cartap, chlorantraniliprole (rynaxypyr), chlordimeform, chlorethoxyfos, chlorfenapyr, chlorfenvinphos, chlorfluazuron, chlormephos, chlorphoxim, chlorprazophos, chlorpyrifos, chlorpyrifos-methyl, chlorthiophos, chromafenozide, cinerin I, cinerin II, cinerins, cismethrin, cloethocarb, closantel, clothianidin, coumaphos, coumithoate, crotamiton, crotoxyphos, crufomate, cyanofenphos, cyanophos, cyanthoate, cyantranilipole, cyazypyr, cyclethrin, cycloprothrin, cyfluthrin, *beta*-cyfluthrin, cyhalothrin, *gamma-*cyhalothrin, *lambda*-cyhalothrin, cypermethrin, *alpha*-cypermethrin, *beta*-cypermethrin, *theta*-cypermethrin, *zeta*-cypermethrin, cyphenothrin, cyromazine, cythioate, decarbofuran, deltamethrin, demephion, demephion-O, demephion-S, demeton, demeton-methyl, demeton-O, demeton-O-methyl, demeton-S, demeton-S-methyl, demeton-S-methylsulphon, diafenthiuron, dialifos, dialifos, diazinon, dicapthon, dichlofenthion, dichlorvos, dicresyl, dicrotophos, dicyclanil, diflubenzuron, dimefluthrin, dimefox, dimethoate, dimethrin, dimethylvinphos, dimetilan, dimitan, dinex, dinoprop, dinosam, dinotefuran, diofenolan, dioxabenzofos, dioxacarb, dioxathion, disulfoton, dithicrofos, DNOC, doramectin, α-ecdysone, ecdysterone, emamectin, EMPC, empenthrin, endothion, EPN, epofenonane, eprinomectin, esfenvalerate, etaphos, ethiofencarb, ethion, ethiprole, ethoate-methyl, ethoprophos, etofenprox, etrimfos, EXD, famphur, fenamiphos, fenazaflor, fenazaquin, fenchlorphos, fenethacarb, fenfluthrin, fenitrothion, fenobucarb, fenoxacrim, fenoxycarb, fenpirithrin, fenpropathrin, fenpyroximate, fensulfothion, fenthion, fenthion-ethyl, fenvalerate, fipronil, flonicamid, flubendiamide, flubendiamide, flucofuron, flucycloxuron, flucythrinate, flufenerim, flufenoxuron, flufenprox, fluvalinate, *tau*-fluvalinate, fonofos, formetanate, formothion, formparanate, fosmethilan, fospirate, fosthietan, furathiocarb, furethrin, halfenprox, halofenozide, heptenophos, heterophos, hexaflumuron, hydramethylnon, hydroprene, hyquincarb, imicyafos, imidacloprid, imidacloprid, imiprothrin, indoxacarb, IPSP, isazofos, isocarbophos, isofenphos, isoprocarb, isoprothiolane, isothioate, isoxathion, ivermectin, jasmolin I, jasmolin II, jodfenphos, juvenile hormone I, juvenile hormone II, juvenile hormone III, kinoprene, lepimectin, leptophos, *d*-limonene, lirimfos, lufenuron, lythidathion, malathion, malonoben, mazidox, mecarbam, mecarphon, menazon, mephosfolan, mesulfenfos, metaflumizone, methacrifos, methamidophos, methidathion, methiocarb, methocrotophos, methomyl, methoprene, methoxyfenozide, metofluthrin, metolcarb, metoxadiazone, mevinphos, mexacarbate, milbemectin, milbemycin oxime, mipafox, monocrotophos, morphothion, moxidectin, naftalofos, naled, nicotine, nifluridide, nitenpyram, nitenpyram, nithiazine, nitrilacarb, novaluron, noviflumuron, omethoate, oxamyl, oxydemeton-methyl, oxydeprofos, oxydisulfoton, parathion, parathion-methyl, penfluron, permethrin, phenkapton, phenothrin, phenthoate, phorate, phosalone, phosfolan, phosmet, phosmet, phosnichlor, phosphamidon, phoxim, phoxim-methyl, pirimetaphos, pirimicarb, pirimiphos-ethyl, pirimiphos-methyl, prallethrin, precocene I, precocene II, precocene III, primidophos, profenofos, profluthrin, promacyl, promecarb, propaphos, propetamphos, propoxur, prothidathion, prothiofos, prothoate, protrifenbute, pyraclofos, pyrafluprole, pyrazophos, pyresmethrin, pyrethrin I, pyrethrin II, pyrethrins, pyridaben, pyridalyl, pyridaphenthion, pyrifluquinazon, pyrimidifen, pyrimitate, pyriprole, pyriproxyfen, quassia, quinalphos, quinalphos-methyl, quinothion, rafoxanide, resmethrin, rotenone, ryania, sabadilla, schradan, selamectin, silafluofen, sophamide, spinetoram, spinosad, 21-butenyl spinosyns, spirodiclofen, spiromesifen, spirotetramat, sulcofuron, sulfotep, sulfoxaflor, sulprofos, tazimcarb, tebufenozide, tebufenpyrad, tebupirimfos, teflubenzuron, tefluthrin, temephos, TEPP, terallethrin, terbufos, tetrachlorvinphos, tetramethrin, tetramethrin, thiacloprid, thiamethoxam, thicrofos, thiocarboxime, thiocyclam, thiodicarb, thiofanox, thiometon, thiosultap, thuringensin, tolfenpyrad, tralomethrin, transfluthrin, transpermethrin, triarathene, triazamate, triazophos, trichlorfon, trichlormetaphos-3, trichloronat, trifenofos, triflumuron, trimethacarb, triprene, vamidothion, vaniliprole, XMC, xylylcarb and zolaprofos. Especially suitable insecticide active ingredients and derivatives thereof include chlorpyrifos, chlorpyrifos-methyl, clothianidin, cyazypyr, *lambda*-cyhalothrin, deltamethrin, dinotefuran, flonicamid, flubendiamide, imidacloprid, rynaxypyr, spinetoram, spinosad, 21-butenyl spinosyns, sulfoxaflor, and thiacloprid.

Suitable insecticides useful with the methods and tankmix additive concentrates described herein include chlorpyrifos, chlorpyrifos-methyl, *gamma*-cyhalothrin, cypermethrin, deltamethrin, halofenozide, methoxyfenozide, sulfoxaflor, spinosad, spinetoram, and tebufenozide.

Examples of fungicides useful with the methods and tankmix additive concentrates described herein include ametoctradin, amisulbrom, ampropylfos, anilazine, antimycin, azaconazole, azithiram, azoxystrobin, barium polysulfide, Bayer 32394, benalaxyl, benodanil, benomyl, benquinox, bentaluron, benthiavalicarb-isopropyl, benzamacril; benzamacril-isobutyl, benzamorf, benzylaminobenzene-sulfonate (BABS) salt, binapacryl, biphenyl, bismerthiazol, bitertanol, bixafen, blasticidin-S, boscalid, bromuconazole, bupirimate, buthiobate, BYF 1047, captafol, captan, carbamorph, carbendazim, carboxin, carpropamid, carvone, CECA, chlobenthiazone, chloraniformethan, chlorfenazole, 1-chloro-2,4-dinitronaphthalene, chloroneb, chlorothalonil, chlorquinox, chlozolinate, climbazole, copper bis(3-phenylsalicylate), coumarin, cuprobam, cyazofamid, cyclafuramid, cyflufenamid, cymoxanil, cypendazole, cyproconazole, cyprodinil, cyprofuram, dazomet, debacarb, decafentin, diammonium ethylenebis (dithiocarb-amate), dichlofluanid, dichlone, dichloran, 3-(4-chlorophenyl)-5-methylrhodanine, dichlorophen, (*RS*)-*N*-(3,5-dichlorophenyl)-2-(methoxymethyl)-succinimide, *N*-3,5-dichlorophenylsuccinimide, 1,3-dichloro-1,1,3,3-tetrafluoroacetone hydrate, dichlozoline, diclobutrazol, diclocymet, diclomezine, diethofencarb, difenoconazole, difenzoquat ion, diflumetorim, dimethirimol, dimethomorph, dimoxystrobin, diniconazole, diniconazole-M, dinocap, dinocton, dinosulfon, dinoterbon, diphenylamine, dipyrithione, ditalimfos, dithianon, dodemorph, dodemorph acetate, dodicin, dodine, dodine free base, drazoxolon, EBP, edifenphos, enestrobin, epoxiconazole, ESBP, etaconazole, etem, ethaboxam, ethirim, ethoxyquin, *N*-ethylmercurio-4-toluenesulfonanilide, etridiazole, famoxadone, fenamidone, fenaminosulf, fenapanil, fenarimol, fenbuconazole, fenfuram, fenhexamid, fenitropan, fenoxanil, fenpiclonil, fenpropidin, fenpropimorph, fenpyrazamine, fentin, fentin acetate, fentin hydroxide, ferbam, ferimzone, fluazinam, fludioxonil, flumorph, fluopicolide, fluopyram, fluoroimide, fluotrimazole, fluoxastrobin, fluquinconazole, flusilazole, flusulfamide, flutolanil, flutriafol, fluxapyrad, folpet, formaldehyde, fosetyl, fosetyl-aluminium, fuberidazole, furalaxyl, furametpyr, furcarbanil, furconazole, furconazole-cis, furmecyclox, furophanate, glyodine, griseofulvin, guazatine, guazatine acetates, GY-81, halacrinate, 2-(2-heptadecyl-2-imidazolin-1-yl)ethanol, Hercules 3944, hexaconazole, hexylthiofos, 8-hydroxyquinoline sulfate, hymexazol, ICIA0858, IK-1140, imazalil, imazalil sulfate, imibenconazole, iminoctadine, iminoctadine triacetate, iminoctadine tris(albesilate), ipconazole, iprobenfos, iprodione, iprovalicarb, isopamphos, isoprothiolane, isopyrazam, isotianil, isovaledione, kasugamycin, kasugamycin hydrochloride hydrate, kresoxim-methyl, mancopper, mancozeb, mandipropamid, maneb, mebenil, mecarbinzid , mefenoxam, mepanipyrim, mepronil, meptyl dinocap, meptyldinocap, metalaxyl, metazoxolon, metconazole, methasulfocarb, methfuroxam, methylmercury dicyandiamide, metiram, metominostrobin, metrafenone, metsulfovax, mildiomycin, milneb, mucochloric anhydride, myclobutanil, myclozolin, nabam, natamycin, nickel bis(dimethyldithiocarbamate), *N*-3-nitrophenylitaconimide, nitrothal-isopropyl, nuarimol, OCH, octhilinone, ofurace, orysastrobin, oxadixyl, oxine-copper, oxpoconazole fumarate, oxycarboxin, pefurazoate, penconazole, pencycuron, penflufen, pentachlorophenol, pentachlorophenyl laurate, penthiopyrad, 2-phenylphenol, phosdiphen, phthalide, picoxystrobin, polyoxin B, polyoxins, polyoxorim, potassium hydroxyquinoline sulfate, probenazole, prochloraz, procymidone, propamocarb, propamocarb hydrochloride, propiconazole, propineb, proquinazid, prothiocarb, prothiocarb hydrochloride, prothioconazole, pyracarbolid, pyraclostrobin, pyraxostrobin, pyrazophos, pyribencarb, pyributicarb, pyridinitril, pyrifenox, pyrimethanil, pyriofenone, pyrometostrobin, pyroquilon, pyroxychlor, pyroxyfur, quinacetol; quinacetol sulfate, quinazamid, quinconazole, quinoclamine, quinoxyfen, quintozene, rabenzazole, Reynoutria sachalinensis extract, salicylanilide, sedaxane, silthiofam, simeconazole, sodium 2-phenylphenoxide, sodium pentachlorophenoxide, spiroxamine, SSF-109, sultropen, SYP-048, SYP-Z048, SYP-Z071, tebuconazole, tebufloquin, tecnazene, tecoram, tetraconazole, thiabendazole, thiadifluor, thicyofen, thifluzamide, thiochlorfenphim, 2-(thiocyanatomethylthio)-benzothiazole, thiophanate, thiophanate-methyl, thioquinox, thiram, tiadinil, tioxymid, tolclofos-methyl, tolylfluanid, triadimefon, triadimenol, triamiphos, triarimol, triazbutil, triazoxide, trichlamide, tricyclazole, tridemorph, trifloxystrobin, triflumizole, triforine, triticonazole, UK-2A, derivatives of UK-2A such as, for example, (3S,6S,7R,8R)-8-benzyl-3-(3-(isobutyryloxymethoxy)-4-methoxypicolinamido)-6-methyl-4,9-dioxo-1,5-dioxonan-7-yl isobutyrate which has a CAS Registry Number of 328255-92-1, urbacid, validamycin, valifenate, valiphenal, vinclozolin, XRD-563, zarilamid, zineb, ziram, and zoxamide.

Suitable fungicides useful with the methods and tankmix additive concentrates described herein include azoxystrobin, bixafen, boscalid, carbendazim, carpropamid, chlorothalonil, derivatives of UK-2A, epoxiconazole, fenbuconazole, fenpropidin, fenpropimorph, fluoxastrobin, flusilazole, fluxapyrad, isopyrazam, isotianil, kasugamycin, mancozeb, meptyldinocap, metconazole, metrafenone, myclobutanil, orysastrobin, penconazole, pencycuron, penthiopyrad, picoxystrobin, probenazole, prochloraz, propiconazole, prothioconazole, pyraclostrobin, quinoxyfen, spiroxamine, tebuconazole, thifluzamide, triadimefon, tricyclazole, tridemorph, trifloxystrobin, and validamycin.

Examples of herbicide safeners useful with the methods and tankmix additive concentrates described herein include benoxacor, benthiocarb, cloquintocet, daimuron, dichlormid, dicyclonon, dimepiperate, fenchlorazole, fenclorim, flurazole, fluxofenim, furilazole, Harpin proteins, isoxadifen, mefenpyr, mephenate, MG 191, MON 4660, naphthalic anhydride (NA), oxabetrinil, R29148, TI-35, and *N*-phenyl-sulfonylbenzoic acid amides.

Suitable herbicide safeners useful with the methods and tankmix additive concentrates described herein include cloquintocet, flurazole, furilazole, isoxadifen, mefenpyr and TI-35.

The pesticide spray mixtures as described herein may be applied in conjunction with one or more additional active ingredients to control a wide variety of unwanted plants, fungi, or insects. When used in conjunction with the other active ingredients, the presently claimed tankmix additive concentrates and pesticide spray mixtures can be formulated with the other active ingredients as premix concentrates, tank mixed with the other active ingredients for spray application, or applied sequentially with the other active ingredients in separate spray applications. Tankmix additive concentrates as described herein may be diluted from 1 to 2000 fold in a pesticide spray mixture (e.g., a water based solution) at the point of use depending on the local agricultural practices and used in pesticide spray applications to control weeds, insects, or fungi in crop and non-crop environments.

In an example of a pesticide spray mixture containing an auxin herbicide and an additional herbicide, the auxinic herbicide is a water soluble salt of 2,4-D or a water soluble salt of dicamba and the additional herbicide is glyphosate or flufosinate. In another example of a pesticide spray mixture containing an auxinic herbicide and an additional herbicide, the auxinic herbicide is 2,4-D choline salt or 2,4-D dimethyl ammonium salt and the additional herbicide is glyphosate dimethyl ammonium salt, glyphosate isopropyl ammonium salt, or glyphosate potassium salt. In a further example of a pesticide spray mixture containing an auxinic herbicide and an additional herbicide, the auxinic herbicide is 2,4-D choline salt or 2,4-D dimethyl ammonium salt, the additional herbicide is glyphosate dimethyl ammonium salt, glyphosate isopropyl ammonium salt, or glyphosate potassium salt, and the triglyceride fatty acid ester is a vegetable or seed oil, for example, almond oil, canola oil, soybean oil, rapeseed oil, olive oil, castor oil, sunflower seed oil, coconut oil, corn oil, cotton seed oil, linseed oil, palm oil, peanut oil, safflower oil, sesame oil, tung oil, or mixtures thereof. In an additional example of a pesticide spray mixture containing an auxinic herbicide and an additional herbicide, the auxinic herbicide is 2,4-D choline salt, the additional herbicide is glyphosate dimethyl ammonium salt, and the triglyceride fatty acid ester is a vegetable or seed oil, for example, almond oil, canola oil, soybean oil, rapeseed oil, olive oil, castor oil, sunflower seed oil, coconut oil, corn oil, cotton seed oil, linseed oil, palm oil, peanut oil, safflower oil, sesame oil, tung oil, or mixtures thereof.

The optimum spray droplet size for a pesticide spray mixture when sprayed depends on the application for which the pesticide spray mixture is used. If droplets are too large, there will be less coverage by the spray; i.e, large droplets will land in certain areas while areas in between will receive little or no spray coverage. The maximum acceptable droplet size may depend on the amount of pesticide spray mixture being applied per unit area and the need for uniformity in spray coverage. Smaller droplets provide more even coverage, but are more prone to drift during spraying. Thus, application parameters such as uniformity in spray coverage must be balanced against the tendency for smaller droplets to drift. For example, if it is particularly windy during spraying, larger droplets may be needed to reduce drift, whereas on a calmer day smaller droplets may be acceptable.

In addition to the physical properties of a particular pesticide spray mixture, spray droplet size may also depend on the spray apparatus, e.g., nozzle size and configuration. The reduction in spray drift may result from a variety of factors including a reduction in the production of fine spray droplets (<150 µm minimum diameter) and an increase in the volume median diameter (VMD) of the spray droplets. In any event, for a given spray apparatus, application, and conditions, and based on the triglyceride fatty acid ester, the median diameter of the plurality of spray droplets created using the tankmix additive concentrates and methods described herein is increased above that of a pesticide spray mixture that does not include the triglyceride fatty acid ester as described herein.

The tankmix additive concentrates described herein include from 1 to 50 weight percent of a surfactant. Additional examples of concentrations for the surfactant incorporated into the aqueous herbicide concentrate mixture described herein include, from 5 to 40 weight percent of the concentrate mixture, from 5 to 30 weight percent of the concentrate mixture, from 5 to 25 weight percent of the concentrate mixture, from 10 to 25 weight percent of the concentrate mixture, and from 10 to 20 weight percent of the concentrate mixture. Further examples of concentrations for the surfactant incorporated into the tankmix additive concentrates described herein include, from 8 to 22 weight percent of the concentrate mixture, from 9 to 21 weight percent of the concentrate mixture, from 11 to 19 weight percent of the concentrate mixture, from 12 to 18 weight percent of the concentrate mixture, from 13 to 17 weight percent of the concentrate mixture, from 14 to 16 weight percent of the concentrate mixture, from 10 to 18 weight percent of the concentrate mixture, from 10 to 16 weight percent of the concentrate mixture, from 10 to 14 weight percent of the concentrate mixture, from 10 to 12 weight percent of the concentrate mixture, from 12 to 20 weight percent of the concentrate mixture, from 14 to 20 weight percent of the concentrate mixture, from 16 to 20 weight percent of the concentrate mixture, and from 18 to 10 weight percent of the concentrate mixture.

The tankmix additive concentrates described herein include from 1 to 90 weight percent of a triglyceride fatty acid ester. Additional examples of concentrations for the a triglyceride fatty acid ester incorporated into the tankmix additive concentrates described herein include, from 1 to 80 weight percent of the concentrate mixture, from 1 to 70 weight percent of the concentrate mixture, from 1 to 60 weight percent of the concentrate mixture, from 1 to 50 weight percent of the concentrate mixture, from 1 to 45 weight percent of the concentrate mixture, from 1 to 40 weight percent of the concentrate mixture, from 1 to 35 weight percent of the concentrate mixture, from 1 to 30 weight percent of the concentrate mixture, from 1 to 25 weight percent of the concentrate mixture, from 1 to 20 weight percent of the concentrate mixture, from 5 to 20 weight percent of the concentrate mixture, and from 10 to 20 weight percent of the concentrate mixture. Further examples of concentrations for the triglyceride fatty acid ester incorporated into the tankmix additive concentrates described herein include, from 5 to 80 weight percent of the concentrate mixture, from 10 to 80 weight percent of the concentrate mixture, from 10 to 70 weight percent of the concentrate mixture, from 10 to 60 weight percent of the concentrate mixture, from 10 to 50 weight percent of the concentrate mixture, from 10 to 40 weight percent of the concentrate mixture, from 10 to 30 weight percent of the concentrate mixture, from 10 to 25 weight percent of the concentrate mixture, from 5 to 40 weight percent of the concentrate mixture, from 5 to 30 weight percent of the concentrate mixture, from 5 to 25 weight percent of the concentrate mixture, from 10 to 25 weight percent of the concentrate mixture, and from 10 to 20 weight percent of the concentrate mixture. More examples of concentrations for the triglyceride fatty acid ester incorporated into the tankmix additive concentrates described herein include, from 8 to 22 weight percent of the concentrate mixture, from 9 to 21 weight percent of the concentrate mixture, from 11 to 19 weight percent of the concentrate mixture, from 12 to 18 weight percent of the concentrate mixture, from 13 to 17 weight percent of the concentrate mixture, from 14 to 16 weight percent of the concentrate mixture, from 10 to 18 weight percent of the concentrate mixture, from 10 to 16 weight percent of the concentrate mixture, from 10 to 14 weight percent of the concentrate mixture, from 10 to 12 weight percent of the concentrate mixture, from 12 to 20 weight percent of the concentrate mixture, from 14 to 20 weight percent of the concentrate mixture, from 16 to 20 weight percent of the concentrate mixture, and from 18 to 10 weight percent of the concentrate mixture.

The weight percent ratio of surfactant to triglyceride fatty acid ester used in the tankmix additive concentrates described herein can range from 50:1 to 1:90. Additional examples of ratio ranges of surfactant to triglyceride fatty acid ester in the tankmix additive concentrates described herein include, from 40:1 to 1:80, from 30:1 to 1:70, from 20:1 to 1:60, from 10:1 to 1:50, from 10:1 to 1:40, from 10:1 to 1:30, from 20:1 to 1:60, from 10:1 to 1:50, from 10:1 to 1:40, from 10:1 to 1:30, from 10:1 to 1:20, from 10:1 to 1:10, from 5:1 to 1:5, from 4:1 to 1:4, from 3:1 to 1:3, from 2:1 to 1:2, from 2:1 to 1:1, and from 1:1 to 1:2. Examples of ratios of surfactant to triglyceride fatty acid ester in the tankmix additive concentrates described herein include, 50:1, 40:1, 30:1, 25:1, 20:1, 15:1, 10:1, 9:1, 8:1, 7:1, 6:1, 5:1, 4:1, 3:1, 2:1, 1:1, 1:2, 1:3, 1:4, 1:5, 1:6, 1:7, 1:8, 1:9, 1:10, 1:15, 1:20, 1:25, 1:30, 1:40, 1:50, 1:60, 1:70, 1:80, and 1:90.

The tankmix additive concentrates can be stored in suitable containers as will be readily recognized by one of skill in the art and can be, for example, solutions or emulsions.

In an example of a pesticide spray mixture to which a tankmix additive concentrate as described herein has been added, the pesticide spray mixture contains a herbicide, the herbicide is an auxinic herbicide, and the auxinic herbicide is 2,4-D choline salt or 2,4-D dimethyl ammonium salt. In another example of a pesticide spray mixture to which a tankmix additive concentrate as described herein has been added, the pesticide spray mixture contains an auxinic herbicide, the auxinic herbicide is 2,4-D choline salt or 2,4-D dimethyl ammonium salt, and the triglyceride fatty acid ester is a vegetable or seed oil, for example, almond oil, canola oil, soybean oil, rapeseed oil, olive oil, castor oil, sunflower seed oil, coconut oil, corn oil, cotton seed oil, linseed oil, palm oil, peanut oil, safflower oil, sesame oil, tung oil, or mixtures thereof. In a further example of a pesticide spray mixture to which a tankmix additive concentrate as described herein has been added, the pesticide spray mixture contains an auxinic herbicide, the auxinic herbicide is 2,4-D choline salt and the triglyceride fatty acid ester is a vegetable or seed oil, for example, almond oil, canola oil, soybean oil, rapeseed oil, olive oil, castor oil, sunflower seed oil, coconut oil, corn oil, cotton seed oil, linseed oil, palm oil, peanut oil, safflower oil, sesame oil, tung oil, or mixtures thereof.

Pesticide spray mixtures containing 2,4-D and glyphosate are prone to incompatibility under certain conditions and concentrations leading to product performance issues and difficulty in using the products, i.e., difficulty with field applications of the products. Incompatibility in spray solutions and aqueous herbicide spray mixtures may be minimized by the use of very small amounts of 2,4-D, for example less than about 3 wt% ae (acid equivalent) relative to the total composition and/or the use of compatibility additives such as is described in U.S. Application Serial No. 61/523,958.

The tankmix additive concentrates described herein may optionally contain one or more additional compatible ingredients. Also, any other additional ingredients providing functional utility, for example, biocides, dyes, stabilizers, fragrants, viscosity-lowering additives, compatibility agents, organic co-solvents, for example, propylene glycol, propylene glycol ethers and/or ethylene glycol ethers and freeze-point depressants may be included in these tankmix additive concentrates. The use of organic co-solvents in the concentrates and spray solutions described herein may provide freezing-point depression and/or enhanced emulsion stability to these compositions.

The following Examples are presented to illustrate various aspects of the compositions and methods described herein.

### Example 1

### Non-aqueous, spray drift control adjuvant concentrate containing canola oil:

A vegetable oil based drift control adjuvant solution containing 200 g/kg of canola oil, 200 g/kg of Atlox™ DP13/6, 25 g/kg of Atlox™ 4912 (Atlox is a trademark of Croda; Edison, NJ), and 575 g/kg of propylene glycol was prepared as follows. A 4-oz vial was first charged with 20.0 g of canola oil (commercially available). To the vial was added, 20.0 g of Atlox™ DP13/6, 2.5 g of Atlox™ 4912 and finally 57.5 g of propylene glycol. The mixture was mixed with an overhead agitator to provide 100 g of a homogenous adjuvant concentrate (Adjuvant Concentrate **1**).

**Table 1: Composition of Adjuvant Concentrate 1**

| **Composition** | **wt%** |
|---|---|
| Canola Oil | 20.0 % |
| Atlox™ DP13/6 | 20.0 % |
| Atlox™ 4912 | 2.5 % |
| Propylene Glycol | 57.5 % |

### Spray solutions containing canola oil adjuvant and spray droplet analysis:

The spray drift control adjuvant concentrate shown in Table 1 was diluted with water. Spray solutions containing 0.1, 0.25, 0.50, and 1.00 % v/v Adjuvant Concentrate 1 were prepared by diluting 0.5, 1.25, 2.5, and 5 mL of the drift-control Adjuvant Concentrate 1 with 499.5, 498.75, 497.5, and 495 mL of deionized water, respectively. All diluted spray solutions were lightly shaken by hand until each sample was homogenous. The four spray solutions and one control sample were sprayed using a Teejet® 8002 flat fan nozzle (Teejet Technologies; Wheaton, IL) at 40 psi (276 kiloPascal) and the spray droplet size distribution measurement was made with a Sympatec Helos/KF high resolution laser diffraction particle sizer with an R7 lens (Sympatec GmbH; Clausthal-Zellerfeld, Germany). The tip of the nozzle was situated 12 inches (30.5 centimeters) above the path of the laser beam of the Sympatec particle sizer. The percentage of driftable fines was expressed as the volume percentage of spray droplets below 150 µm volume mean diameter (VMD) as shown in Table 2.

**Table 2: Spray Droplet Analysis of Sprays Containing Adjuvant Concentrate 1**

| **Amount of Adjuvant Concentrate 1 (v/v%)** | **Spray Droplet Analysis** | |
|---|---|---|
| | Spray Droplet VMD, µm | Volume Percentage of Driftable Fines <150 µm VMD |
| 0 % (pure water) | 167 | 44 |
| 0.1 % | 269 | 18 |
| 0.25 % | 270 | 17 |
| 0.5 % | 266 | 18 |
| 1.0 % | 268 | 17 |

### Example 2

### Tank-mixed herbicide spray solutions with drift-control adjuvant and spray droplet analysis:

Aqueous herbicide spray solutions containing 2 % v/v of herbicide concentrate and 0.5 % v/v of drift-control Adjuvant Concentrate **1** were prepared by diluting 10 mL of herbicide concentrate and 2.5 mL of Adjuvant Concentrate **1** with 487.5 mL of DI water (Table 3). All diluted spray solutions were lightly shaken by hand until each sample was homogenous. Ten herbicide spray dilutions containing 2 % v/v of herbicide concentrate and 0.5 % v/v drift-control adjuvant shown in Table 2 and ten respective control spray dilutions containing only 2 % v/v of herbicide concentrate were prepared in this manner and were sprayed as described in Example 1. The percentage of driftable fines was expressed as the volume percentage of spray droplets below 150 µm volume mean diameter (VMD) as shown in Table 3.

**Table 3. Spray Droplet Analysis of Herbicide Spray Solutions with and without Adjuvant Concentrate 1**

| **Herbicide Concentrates¹** | **2 % v/v Herbicide Concentrate (Control)** | | **2 % v/v Herbicide Concentrate + 0.5 % v/v Adjuvant Concentrate 1** | |
|---|---|---|---|---|
| | Spray Droplet VMD, µm | Volume Percentage of Driftable Fines <150 µm VMD | Spray Droplet VMD, µm | Volume Percentage of Driftable Fines <150 µm VMD |
| 2,4-D choline | 160 | 46 | 262 | 18 |
| Roundup® Powermax | 148 | 50 | 250 | 19 |
| Dominator™ 480 TF | 155 | 48 | 258 | 17 |
| Durango® | 149 | 50 | 248 | 20 |
| Zapp Qi® | 159 | 46 | 258 | 18 |
| Transorb® | 147 | 51 | 244 | 21 |
| Transorb® R | 145 | 51 | 250 | 19 |
| Roundup® WDG | 150 | 49 | 249 | 21 |
| Banvel® II | 156 | 47 | 267 | 17 |
| Ignite® | 140 | 53 | 243 | 21 |

| | | | | |
|---|---|---|---|---|
| ¹ 2,4-D choline concentrate contains 538 gae/L 2,4-D choline and is made as described in Example 3; Roundup® Powermax contains 540 gae/L glyphosate potassium (Monsanto; St. Louis, MO); Dominator™ 480 TF contains 480 gae/L glyphosate DMA (Dow AgroSciences; Indianapolis, IN); Durango® contains 480 gae/L glyphosate DMA (Dow AgroSciences; Indianapolis, IN); Zapp Qi® contains 500 gae/L glyphosate potassium (Syngenta; Wilmington, DE); Transorb® contains 480 gae/L glyphosate IPA; Transorb® R contains 480 gae/L glyphosate potassium (Monsanto; St. Louis, MO); Roundup® WG contains 720 gae/kg glyphosate ammonium (Monsanto; St. Louis, MO); Banvel® II contains 480 gae/L dicamba diglycolamine (BASF; Research Triangle Park, NC); Ignite® contains 280 gae/L glufosinate ammonium (Bayer; Research Triangle Park, NC). | | | | |

### Example 3

### Tank-mixed spray solutions containing two herbicides and a drift-control adjuvant, and spray droplet analysis:

Aqueous herbicide spray solutions containing 2 % v/v of a 2,4-D choline concentrate solution (prepared by dissolving 4171.0 g of 2,4-D acid flake (technical grade, 97.1 wt%) into 4789.4 g of choline hydroxide solution (45% aqueous solution) under low shear agitation to give a solution with a pH of 7.0 and a density of 1.21 g/mL), 2 % v/v of a second herbicide concentrate, and 0.5 % v/v of a drift-control adjuvant were prepared by diluting 10 mL of the 2,4-D choline concentrate solution, 10 mL of the second herbicide concentrate, and 2.5 mL of Adjuvant Concentrate **1** with 477.5 mL of DI water (Table 4). The diluted spray solutions were lightly shaken by hand until each sample was homogenous. The seven herbicide spray solutions with drift-control adjuvant and seven control samples without drift-control adjuvant were sprayed using the same method described in Example 1. The percentage of driftable fines was expressed as the volume percentage of spray droplets below 150 µm volume mean diameter (VMD) as shown in Table 4.

**Table 4. Spray Droplet Analysis of Tank-mixed Herbicide Spray Solutions with and without Adjuvant Concentrate 1**

| **First Herbicide Concentrate (2 % v/v)** | **Second Herbicide Concentrate (2 % v/v)** | **2 % v/v of Herbicide Concentrates (Control)** | | **2 % v/v of Herbicide Concentrates + 0.5 % v/v of Adjuvant Concentrate 1** | |
|---|---|---|---|---|---|
| | | Spray Droplet VMD, µm | Volume Percentage of Driftable Fines <150 µm VMD | Spray Droplet VMD, µm | Volume Percentage of Driftable Fines <150 µm VMD |
| 2,4-D Choline | Roundup® Powermax | 149 | 50 | 254 | 18 |
| 2,4-D Choline | Dominator™ 480 TF | 153 | 48 | 251 | 20 |
| 2,4-D Choline | Durango® | 154 | 48 | 253 | 19 |
| 2,4-D Choline | Zapp Qi® | 152 | 49 | 253 | 20 |
| 2,4-D Choline | Transorb® | 148 | 50 | 255 | 20 |
| 2,4-D Choline | Transorb® R | 149 | 50 | 252 | 20 |
| 2,4-D Choline | Roundup® WDG | 144 | 52 | 231 | 24 |

### Example 4

### Comparison of drift-reduction performance between commercial Interlock® and the canola oil adjuvant concentrate described herein:

Aqueous herbicide spray solutions containing 2 % v/v of 2,4-D choline concentrate solution (prepared as described in Example 3), 2 % v/v of a second herbicide concentrate, and 0.5 % v/v of a canola oil drift-control adjuvant concentrate were prepared by diluting 10 mL of the 2,4-D choline concentrate solution, 10 mL of the second herbicide concentrate, and 2.5 mL of Adjuvant Concentrate **1** with 477.5 mL of DI water (Table 5). The comparison spray solution samples containing 2 % v/v of the 2,4-D choline concentrate solution, 2 % v/v of the second herbicide concentrate, and 0.3 % v/v of commercial drift-control adjuvant InterLock® were prepared by diluting 10 mL of 2,4-D choline concentrate solution, 10 mL of the second herbicide concentrate, and 1.5 mL of InterLock® adjuvant with 478.5 mL of DI water (Table 5). All diluted spray solutions were lightly shaken by hand until each sample was homogenous. All herbicide spray solutions and control samples with or without a spray drift-control adjuvant were sprayed using the same method described in Example 1. The percentage of driftable fines was expressed as the volume percentage of spray droplets below 150 µm volume mean diameter (VMD) as shown in Table 5.

**Table 5. Spray Droplet Analysis of Tank-mixed Herbicide Spray Solutions Containing InterLock®¹ Adjuvant or Adjuvant Concentrate 1**

| **First Herbicide Concentrate (2% v/v)** | **Second Herbicide Concentrate (2 % v/v)** | | | | | | |
|---|---|---|---|---|---|---|---|
| | Water (control) | Roundup PowerMax® | Durango® | Zapp Qi® | Transorb® | Transorb R® | Roundup ® WG |
| | Volume Percentage of Driftable Fines (<150 µm VMD) | | | | | | |
| 2,4-D Choline | 45 | 50 | 48 | 49 | 50 | 50 | 52 |
| 2,4-D Choline + InterLock® | 25 | 24 | 32 | 18 | 50 | 50 | 33 |
| 2,4-D Choline + Adjuvant Concentrate **1** | 18 | 18 | 18 | 20 | 19 | 20 | 24 |

| | | | | | | | |
|---|---|---|---|---|---|---|---|
| ¹ InterLock® spray drift adjuvant (Winfield Solutions, LLC; St. Paul, MN) | | | | | | | |

### Example 5

### Comparison of drift-reduction performance between commercial Interlock® and the canola oil adjuvant concentrate described herein:

Aqueous herbicide spray solutions containing 2 % v/v of 2,4-D DMA concentrate solution DMA® 4 (contains 480 gae/L of 2,4-D DMA; Dow AgroSciences; Indianapolis, IN), 2 % v/v of a second herbicide concentrate, and 0.1 % v/v of drift-control Adjuvant Concentrate 1 were prepared by diluting 10 mL of the 2,4-D DMA concentrate solution, 10 mL of the second herbicide concentrate, and 0.5 mL of Adjuvant Concentrate 1 with 479.5 mL of DI water (Table 6). The comparison spray solution samples containing 2 % v/v of 2,4-D DMA concentrate solution DMA® 4, 2 % v/v of the second herbicide concentrate, and 0.1 % v/v of commercial drift-control adjuvant InterLock® were prepared by diluting 10 mL of the 2,4-D DMA concentrate solution, 10 mL of the second herbicide concentrate, and 0.5 mL of adjuvant InterLock® with 479.5 mL of DI water (Table 6). In a similar manner, herbicide solutions containing 0.3% v/v of the adjuvants were also prepared. All diluted spray solutions were lightly shaken by hand until each sample was homogenous and were sprayed using the same method described in Example 1. The percentage of driftable fines was expressed as the volume percentage of spray droplets below 150 µm volume mean diameter (VMD) as shown in Table 6.

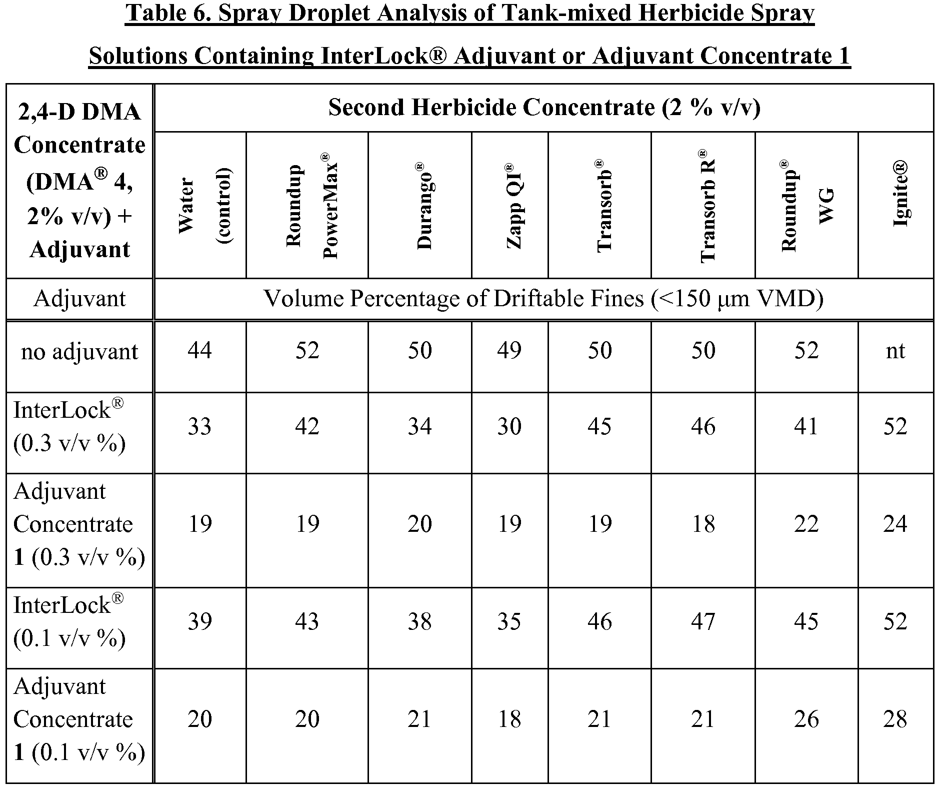

### Example 6

### Vegetable oil based drift-control Adjuvant Concentrates 2, 3, and 4:

Vegetable oil based drift control adjuvant concentrates containing 333.3 g/kg of canola oil, 333.3 g/kg of Atlox DP13/6, 41.7 g/kg of Atlox 4912, and 291.7 g/kg of a Dowanol™ co-solvent (Dow Chemical, Midland, MI) were prepared as follows. A 4-oz vial was first charged with 33.33 g of canola oil. To the vial was added, 33.33 g of Atlox® DP13/6, 4.17 g of Atlox 4912 and finally 29.17 g of a Dowanol™ co-solvent. The mixture was mixed with an overhead agitator to provide 100 g of a homogenous adjuvant concentrate (Table 7).

**Table 7. Composition of Vegetable Oil Based Spray Drift Control Adjuvant Concentrates 2, 3, and 4**

| **Composition** | **Adjuvant Concentrate 2 (wt%)** | **Adjuvant Concentrate 3 (wt%)** | **Adjuvant Concentrate 4 (wt%)** |
|---|---|---|---|
| Canola Oil | 33.33 | 33.33 | 33.33 |
| Atlox DP13/6 | 33.33 | 33.33 | 33.33 |
| Atlox 4912 | 4.17 | 4.17 | 4.17 |
| Dowanol™ DPnP | 29.17 | 0 | 0 |
| Dowanol™ DPM | 0 | 29.17 | 0 |
| Dowanol™ EB | 0 | 0 | 29.17 |

### Herbicide spray solutions with drift-control adjuvant and spray droplet analysis:

Aqueous herbicide spray solutions containing 2 % v/v of herbicide concentrate and 0.3 % v/v of drift-control Adjuvant Concentrate **2, 3,** or **4** were prepared by diluting 10 mL of herbicide concentrate and 1.5 mL of Adjuvant Concentrate **2, 3,** or **4** with 488.5 mL of DI water. All diluted spray solutions were lightly shaken by hand until each sample was homogenous. All herbicide spray solutions and control samples without drift-control adjuvant were sprayed using the same method described in example 1. The percentage of driftable fines was expressed as the volume percentage of spray droplets below 150 µm volume mean diameter (VMD) as shown in Table 8.

**Table 8. Spray Droplet Analysis of Herbicide Sprays Containing Spray Drift-control Adjuvant Concentrate 2, 3 or 4**

| **Herbicide Concentrate** | **Spray Droplet Analysis** | | | |
|---|---|---|---|---|
| | 2 % v/v Herbicide concentrate (Control) | 2 % v/v Herbicide concentrate + 0.3 % v/v Adjuvant Concentrate **2** | 2 % v/v Herbicide concentrate + 0.3 % v/v Adjuvant Concentrate **3** | 2 % v/v Herbicide concentrate + 0.3 % v/v Adjuvant Concentrate **4** |
| | Volume Percentage of Driftable Fines <150 µm VMD | | | |
| Roundup® Powermax | 50 | 20 | 20 | 21 |
| DMA® 4 | 48 | 22 | 21 | 22 |
| Ignite® | 53 | 27 | 22 | 24 |

### Example 7

### Pesticide spray solutions containing drift-control adjuvant and spray droplet analysis:

Aqueous pesticide spray solutions containing the varied amount of pesticide concentrates and 0.3 % v/v of drift-control adjuvant concentrate **3** were prepared by diluting varied amount of peistide concentrate and 1.5 mL of Adjuvant Concentrate **3** with remaining DI water to obtain 500 mL of total spray solutions (Table 9). All diluted spray solutions were lightly shaken by hand until each sample was homogenous. All pesticide spray solutions and control samples without drift-control adjuvant were sprayed using the same method described in example 1. The percentage of driftable fines was expressed as the volume percentage of spray droplets below 150 µm volume mean diameter (VMD) as shown in Table 9.

**Table 9. Spray Droplet Analysis of Pesticide Sprays Containing Spray Drift-control Adjuvant Concentrate 3**

| **Pesticide Product¹** | **Product Dilution** | **Diluted Pesticide Concentrate (Control)** | | **Diluted Pesticide Concentrate + 0.3 % v/v Adjuvant Concentrate 3** | |
|---|---|---|---|---|---|
| | Pesticide Product in 100 mL of Spray Solution | Spray Droplet VMD, µm | Volume Percentage of Driftable Fines <150 µm VMD | Spray Droplet VMD, µm | Volume Percentage of Driftable Fines <150 µm VMD |
| Delegate™ WG | 1 gram | 173 | 41 | 276 | 16 |
| Spider™ 840WG | 0.06 gram | 169 | 42 | 264 | 18 |
| Milestone™ Herbicide | 0.4 mL | 163 | 44 | 273 | 16 |

| | | | | | |
|---|---|---|---|---|---|
| ¹Delegate™ WG contains 250 g/kg of spinetoram; Spider™ 840WG contains 840 g/kg of diclosulam; Milestone™ herbicide contains 240 gae/L of aminopyralid triisopropanolammonium salt; (all are available from Dow Agrosciences; Indianapolis, IN). | | | | | |

### Example 8

### Herbicide spray solutions containing dilutions of drift-control Adjuvant Concentrate 3 and spray droplet analysis:

Spray solutions containing 0.01, 0.025, and 0.05 % v/v of Adjuvant Concentrate **3** were prepared by diluting 0.05, 0.125, and 0.25 mL of drift-control Adjuvant Concentrate **3** with 499.95, 499.875, and 499.75 mL, respectively, of deionized water (control samples), or with Roundup Powermax® herbicide or Durango® herbicide (to provide 2.0 v/v% dilutions of each herbicide product). All diluted spray solutions were lightly shaken by hand until each sample was homogenous. All spray solutions and control samples without drift-control adjuvant were sprayed using the same method described in example 1. The percentage of driftable fines was expressed as the volume percentage of spray droplets below 150 µm volume mean diameter (VMD) as shown in Table 10.

**Table 10. Spray Droplet Analysis of Water Diluted Spray Solutions Containing Adjuvant Concentrate 3**

| **Adjuvant Concentrate 3 (vol%)** | **Water Dilution** | **2 v/v% Roundup Powermax® Dilution** | **2 v/v% Durango® Dilution** |
|---|---|---|---|
| | Volume Percentage of Driftable Fines <150 µm VMD | | |
| 0 % (control) | 44 (water only) | 50 | 48 |
| 0.01 % | 22 | 29 | 25 |
| 0.025 % | 22 | 24 | 23 |
| 0.05 % | 22 | 22 | 20 |

### Example 9

### Vegetable oil based spray drift-control Adjuvant Concentrates 5, 6, 7 and 8 containing various phosphate ester surfactants:

Vegetable oil based drift control adjuvant concentrates containing 200 g/kg of canola oil, 200 g/kg of a phosphate ester (Croda; Edison, NJ), 25 g/kg of Atlox 4912, and 575 g/kg of Dowanol™ DPM solvent were prepared as follows. A 4-oz vial was first charged with 20 g of canola oil. To the vial was added, 20 g of a phosphate ester, 2.5 g of Atlox 4912 and finally, 57.5 g of Dowanol™ solvent. The mixture was mixed with an overhead agitator to provide 100 g of a homogenous adjuvant concentrate. Adjuvant Concentrates **5, 6, 7** and **8** were prepared in this manner (Table 11).

**Table 11. Composition Vegetable Oil Based Spray Drift Control Adjuvant Concentrates 5, 6, 7, and 8**

| **Composition** | **Adjuvant Concentrate 5 (wt%)** | **Adjuvant Concentrate 6 (wt%)** | **Adjuvant Concentrate 7 (wt%)** | **Adjuvant Concentrate 8 (wt%)** |
|---|---|---|---|---|
| Canola Oil | 20 | 20 | 20 | 20 |
| Atplus 310¹ | 20 | 0 | 0 | 0 |
| Multitrope 1214¹ | 0 | 20 | 0 | 0 |
| Altox AL 3382¹ | 0 | 0 | 20 | 0 |
| Crodafos T5A¹ | 0 | 0 | 0 | 20 |
| Atlox 4912 | 2.5 | 2.5 | 2.5 | 2.5 |
| Dowanol™ DPM | 57.5 | 57.5 | 57.5 | 57.5 |

| | | | | |
|---|---|---|---|---|
| ¹Phosphate ester surfactants are available from Croda (Edison, NJ). | | | | |

### Herbicide spray solutions containing drift-control Adjuvant Concentrates 5, 6, 7 or 8, and spray droplet analysis:

Aqueous herbicide spray solutions containing 2 % v/v of herbicide concentrate and 0.1 % v/v of drift-control adjuvant 5, 6, 7 or 8 were prepared by diluting 10 mL of the herbicide concentrate and 0.5 mL of adjuvant 5, 6, 7 or 8 with 489.5 mL of DI water. All diluted spray solutions were lightly shaken by hand until each sample was homogenous. All herbicide spray solutions and control samples without drift-control adjuvant were sprayed using the same method described in example 1. The percentage of driftable fines was expressed as the volume percentage of spray droplets below 150 µm volume mean diameter (VMD) as shown in Table 12.

**Table 12. Spray Droplet Analysis of Herbicide Sprays Containing Adjuvant Concentrates 5, 6, 7 or 8**

| **Herbicide Concentrate** | **Spray Drift Analysis** | | | | |
|---|---|---|---|---|---|
| | 2 % v/v herbicide concentrate (Control) | 2 % v/v herbicide concentrate + 0.1 % v/v Adjuvant Concentrate **5** | 2 % v/v herbicide concentrate + 0.1 % v/v Adjuvant Concentrate **6** | 2 % v/v herbicide concentrate + 0.1 % v/v Adjuvant Concentrate **7** | 2 % v/v herbicide concentrate + 0.1 % v/v Adjuvant Concentrate **8** |
| | Volume Percentage of Driftable Fines <150 µm VMD | | | | |
| Roundup® Powermax | 50 | 22 | 23 | 22 | 21 |
| Durango® | 48 | 22 | 21 | 20 | 20 |
| Ignite® | 53 | 25 | 29 | 29 | 24 |

### Example 10

### Plant oil based drift-control Adjuvant Concentrates 9, 10, 11, and 12:

Plant oil based drift control adjuvant concentrates containing 200 g/kg of a plant oil, 200 g/kg of Altox DP13/6, 25 g/kg of Atlox 4912, and 575 g/kg of Dowanol™ DPM solvent were prepared as follows. A 4-oz vial was first charged with 20 g of plant oil. To the vial was added, 20 g of Atlox DP13/6, 2.5 g of Atlox 4912 and finally 57.5 g of Dowanol™ solvent. The mixture was mixed with an overhead agitator to provide 100 g of a homogenous adjuvant concentrate. Adjuvant Concentrates **9, 10, 11** and **12** were prepared in this manner (Table 13).

**Table 13. Composition of Plant Oil Based Spray Drift Control Adjuvant Concentrates 9, 10, 11, and 12**

| **Composition** | **Adjuvant Concentrate 9 (wt%)** | **Adjuvant Concentrate 10 (wt%)** | **Adjuvant Concentrate 11 (wt%)** | **Adjuvant Concentrate 12 (wt%)** |
|---|---|---|---|---|
| Almond Oil | 20 | 0 | 0 | 0 |
| Corn Oil | 0 | 20 | 0 | 0 |
| Rapeseed Oil | 0 | 0 | 20 | 0 |
| Sunflower Oil | 0 | 0 | 0 | 20 |
| Atlox DP 13/6 | 20 | 20 | 20 | 20 |
| Atlox 4912 | 2.5 | 2.5 | 2.5 | 2.5 |
| Dowanol™ DPM | 57.5 | 57.5 | 57.5 | 57.5 |

### Herbicide spray solutions containing drift-control Adjuvant Concentrates 9, 10, 11 or 12, and spray droplet analysis:

Aqueous herbicide spray solutions containing 2 % v/v of a herbicide concentrate and 0.1 % v/v of drift-control Adjuvant Concentrate **9, 10, 11** or **12** were prepared by diluting 10 mL of the herbicide concentrate and 0.5 mL of Adjuvant Concentrate **9, 10, 11** or **12** with 489.5 mL of DI water. All diluted spray solutions were lightly shaken by hand until each sample was homogenous. All herbicide spray solutions and control samples without drift-control adjuvant were sprayed using the method described in Example 1. The percentage of driftable fines was expressed as the volume percentage of spray droplets below 150 µm volume mean diameter (VMD) as shown in Table 14.

**Table 14. Spray Droplet Analysis of Herbicide Sprays**

| **Herbicide Concentrate** | **Spray Drift Analysis** | | | | |
|---|---|---|---|---|---|
| | 2 % v/v herbicide concentrate (Control) | 2 % v/v herbicide concentrate + 0.1 % v/v Adjuvant Concentrate **9** | 2 % v/v herbicide concentrate + 0.1 % v/v Adjuvant Concentrate **10** | 2 % v/v herbicide concentrate + 0.1 % v/v Adjuvant Concentrate **11** | 2 % v/v herbicide concentrate + 0.1 % v/v Adjuvant Concentrate **12** |
| | Volume Percentage of Driftable Fines <150 µm VMD | | | | |
| Roundup® Powermax | 50 | 20 | 21 | 23 | 20 |
| Durango® | 48 | 19 | 20 | 22 | 19 |
| Ignite® | 53 | 25 | 26 | 28 | 23 |

### Example 11

### Vegetable oil based spray drift-control Adjuvant Concentrate 13:

Vegetable oil based drift control Adjuvant Concentrate **13** containing 200 g/kg (20 wt%) of canola oil, 25 g/kg (2.5 wt%) of Atlas G-5000, 25 g/kg (2.5 wt%) of Atlox 4912, and 750 g/kg (75 wt%) of Dowanol™ DPM solvent were prepared as follows. A 4-oz vial was first charged with 20 g of canola oil. To the vial was added, 2.5 g of Atlas G-5000, 2.5 g of Atlox 4912 and finally 75 g of Dowanol™ solvent. The mixture was mixed with an overhead agitator to provide 100 g of the homogenous Adjuvant Concentrate **13.**

### Herbicide spray solutions containing drift-control Adjuvant Concentrate 13 and spray droplet analysis:

Aqueous herbicide spray solutions containing 2 % v/v of herbicide concentrate and 0.1 % v/v of drift-control Adjuvant Concentrate **13** were prepared by diluting 10 mL of the herbicide concentrate and 0.5 mL of Adjuvant Concentrate **13** with 489.5 mL of deionized water. All diluted spray solutions were lightly shaken by hand until each sample was homogenous. All herbicide spray solutions and control samples without drift-control adjuvant were sprayed using the same method described in Example 1. The percentage of driftable fines was expressed as the volume percentage of spray droplets below 150 µm volume mean diameter (VMD) as shown in Table 15.

**Table 15. Spray Droplet Analysis of Herbicide Sprays**

| **Herbicide Concentrate** | **Spray Drift Analysis** | |
|---|---|---|
| | 2 % v/v Herbicide Concentrate (Control) | 2 % v/v Herbicide Concentrate + 0.1 % v/v Adjuvant Concentrate **13** |
| | Volume Percentage of Driftable Fines <150 µm VMD | |
| Roundup® Powermax | 50 | 24 |
| Durango® | 48 | 22 |
| Ignite® | 53 | 36 |

### Example 12

### Vegetable oil based spray drift-control Adjuvant Concentrate 14:

Vegetable oil based drift control Adjuvant Concentrate **14** containing 200 g/kg (20 wt%) of canola oil, 25 g/kg (2.5 wt%) of Atlox 4912, and 775 g/kg (77.5 wt%) of Dowanol™ DPM solvent were prepared as follows. A 4-oz vial was first charged with 20 g of canola oil. To the vial was added, 2.5 g of Atlox 4912 and finally 77.5 g of Dowanol™ solvent. The mixture was mixed with an overhead agitator to provide 100 g of the homogenous Adjuvant Concentrate **14.**

### Herbicide spray solutions containing drift-control Adjuvant Concentrate 14 and spray droplet analysis:

Aqueous herbicide spray solutions containing 2 % v/v of herbicide concentrate and 0.1 % v/v of drift-control Adjuvant Concentrate **14** were prepared by diluting 10 mL of the herbicide concentrate and 0.5 mL of Adjuvant Concentrate **14** with 489.5 mL of deionized water. All diluted spray solutions were lightly shaken by hand until each sample was homogenous. All herbicide spray solutions and control samples without drift-control adjuvant were sprayed using the same method described in Example 1. The percentage of driftable fines was expressed as the volume percentage of spray droplets below 150 µm volume mean diameter (VMD) as shown in Table 16.

**Table 16. Spray Droplet Analysis of Herbicide Sprays**

| **Herbicide Concentrate** | **Spray Drift Analysis** | |
|---|---|---|
| | 2 % v/v Herbicide Concentrate (Control) | 2 % v/v Herbicide Concentrate + 0.1 % v/v Adjuvant Concentrate **14** |
| | Volume Percentage of Driftable Fines <150 µm VMD | |
| Roundup® Powermax | 50 | 24 |
| Durango® | 48 | 22 |
| Ignite® | 53 | 35 |

### Example 13

### Vegetable oil based spray drift-control Adjuvant Concentrate 15:

Vegetable oil based drift control Adjuvant Concentrate **15** containing 500 g/kg (50 wt%) of canola oil and 500 g/kg (50 wt%) of Atlox DP13/6 were prepared as follows. A 4-oz vial was first charged with 50 g of canola oil. To the vial was added, 50 g of Atlox DP13/6. The mixture was mixed with an overhead agitator to provide 100 g of the homogenous Adjuvant Concentrate **15.**

### Herbicide spray solutions containing drift-control Adjuvant Concentrate 15 and spray droplet analysis:

Aqueous herbicide spray solutions containing 2 % v/v of herbicide concentrate and 0.1 % v/v of drift-control Adjuvant Concentrate **15** were prepared by diluting 10 mL of the herbicide concentrate and 0.5 mL of Adjuvant Concentrate **15** with 489.5 mL of deionized water. All diluted spray solutions were lightly shaken by hand until each sample was homogenous. All herbicide spray solutions and control samples without drift-control adjuvant were sprayed using the same method described in Example 1. The percentage of driftable fines was expressed as the volume percentage of spray droplets below 150 µm volume mean diameter (VMD) as shown in Table 17.

**Table 17. Spray Droplet Analysis of Herbicide Sprays**

| **Herbicide Concentrate** | **Spray Drift Analysis** | |
|---|---|---|
| | 2 % v/v Herbicide Concentrate (Control) | 2 % v/v Herbicide Concentrate + 0.1 % v/v Adjuvant Concentrate **15** |
| | Volume Percentage of Driftable Fines <150 µm VMD | |
| Roundup® Powermax | 50 | 33 |
| Durango® | 48 | 29 |
| Ignite® | 53 | 51 |

### Example 14

### Vegetable oil based spray drift-control Adjuvant Concentrate 16:

Vegetable oil based drift control Adjuvant Concentrate **16** containing 200 g/kg (20 wt%) of canola oil, 25 g/kg (2.5 wt%) of Atlox 4912, 200 g/kg (20 wt %) of Ninate 60 L (Stepan), and 575 g/kg (57.5 wt%) of Dowanol™ DPM solvent were prepared as follows. A 4-oz vial was first charged with 20 g of canola oil. To the vial was added, 2.5 g of Atlox 4912, 20 g of Ninate 60L and finally 77.5 g of Dowanol™ solvent. The mixture was mixed with an overhead agitator to provide 100 g of the homogenous Adjuvant Concentrate **16.**

### Herbicide spray solutions containing drift-control Adjuvant Concentrate 16 and spray droplet analysis:

Aqueous herbicide spray solutions containing 2 % v/v of herbicide concentrate and 0.1 % v/v of drift-control Adjuvant Concentrate **16** were prepared by diluting 10 mL of the herbicide concentrate and 0.5 mL of Adjuvant Concentrate **16** with 489.5 mL of deionized water. All diluted spray solutions were lightly shaken by hand until each sample was homogenous. All herbicide spray solutions and control samples without drift-control adjuvant were sprayed using the same method described in Example 1. The percentage of driftable fines was expressed as the volume percentage of spray droplets below 150 µm volume mean diameter (VMD) as shown in Table 17.

**Table 17. Spray Droplet Analysis of Herbicide Sprays**

| **Herbicide Concentrate** | **Spray Drift Analysis** | |
|---|---|---|
| | 2 % v/v Herbicide Concentrate (Control) | 2 % v/v Herbicide Concentrate + 0.1 % v/v Adjuvant Concentrate **16** |
| | Volume Percentage of Driftable Fines <150 µm VMD | |
| Roundup® Powermax | 50 | 22 |
| Durango® | 48 | 19 |
| Ignite® | 53 | 28 |

## Claims

1. A tankmix additive concentrate, comprising:
from 1 to 50 weight percent of the concentrate mixture of a surfactant, wherein the surfactant is a mixture of a phosphate ester surfactant with a polymeric surfactant, wherein the phosphate ester surfactant is an acid or salt of a mono or dialkyl phosphate ester, an acid or salt of an ethoxylated mono or dialkyl phosphate ester, an acid or salt of a mono or dialkyl phosphate ester of an ethoxylated tristyrylphenol, or an acid or salt of a mono or dialkyl phosphate ester of an ethoxylated phenol, or an ethoxylated alkylphenol and the polymeric surfactant is an ABA block copolymer having a hydrophilic portion of polyethylene oxide and a hydrophobic portion of poly (12-hydroxystearate), a polyvinyl alcohol resin wherein the degree of hydrolysis is 86-89%, a block or graft acrylate or methacrylate copolymer, an alkyd polyethylene oxide resin, or an AB block copolymer containing EO and PO blocks; and
from 1 to 90 weight percent of the concentrate mixture of a triglyceride fatty acid ester of Formula III: 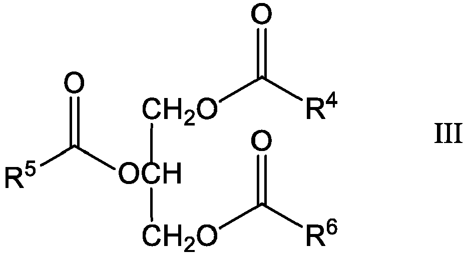 wherein R⁴, R⁵, and R⁶ independently represent saturated or unsaturated (C₆-C₂₁) alkyls, and
wherein the tankmix additive concentrate forms a stable emulsion upon dilution into a pesticide spray mixture.

2. The tankmix additive concentrate of claim 1, wherein the triglyceride fatty acid ester of Formula III is a vegetable oil or a seed oil selected from almond oil, canola oil, soybean oil, rapeseed oil, olive oil, castor oil, sunflower seed oil, coconut oil, corn oil, cotton seed oil, linseed oil, palm oil, peanut oil, safflower oil, sesame oil, tung oil, or mixtures thereof.

3. Use of the tankmix additive concentrate of any of claims 1-2 for dilution into a pesticide spray mixture, wherein the pesticide spray mixture contains a herbicide, an insecticide, a fungicide, or mixtures thereof.

4. The use of claim 3, wherein the pesticide spray mixture contains a herbicide, preferably an auxinic herbicide, more preferably a water soluble salt of 2,4-D, a water soluble salt of aminocyclopyrachlor, a water soluble salt of aminopyralid, a water soluble salt of clopyralid, a water soluble salt of dicamba, a water soluble salt of picloram, a water soluble salt of triclopyr, or mixtures thereof.

5. The use of any of claims 3 or 4, wherein the pesticide spray mixture further comprises an additional herbicide, which preferably is glyphosate or glufosinate, wherein more preferably the pesticide spray mixture contains a water soluble salt of 2,4-D or a water soluble salt of dicamba and the additional herbicide is glyphosate or glufosinate.

6. A method for reducing spray drift during pesticide spray application comprising:
providing a tankmix additive concentrate comprising:
from 1 to 50 weight percent of the concentrate mixture of a surfactant, wherein the surfactant is a mixture of a phosphate ester surfactant with a polymeric surfactant, wherein the phosphate ester surfactant is an acid or salt of a mono or dialkyl phosphate ester, an acid or salt of an ethoxylated mono or dialkyl phosphate ester, an acid or salt of a mono or dialkyl phosphate ester of an ethoxylated tristyrylphenol, or an acid or salt of a mono or dialkyl phosphate ester of an ethoxylated phenol, or an ethoxylated alkylphenol and the polymeric surfactant is an ABA block copolymer having a hydrophilic portion of polyethylene oxide and a hydrophobic portion of poly (12-hydroxystearate), a polyvinyl alcohol resin wherein the degree of hydrolysis is 86-89%, a block or graft acrylate or methacrylate copolymer, an alkyd polyethylene oxide resin, or an AB block copolymer containing EO and PO blocks;
from 1 to 90 weight percent of the concentrate mixture of a triglyceride fatty acid ester of Formula III: 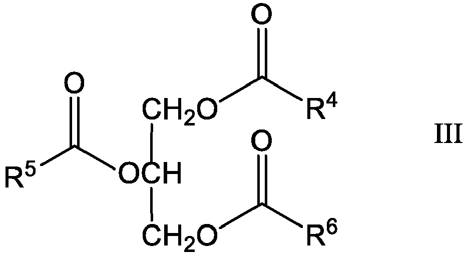
wherein R⁴, R⁵, and R⁶ independently represent saturated or unsaturated (C₆-C₂₁) alkyls, and
wherein the tankmix additive concentrate forms a stable emulsion upon addition to pesticide spray mixture;
adding the tankmix additive concentrate to a spray tank containing the pesticide spray mixture; and
spraying the pesticide spray mixture,
wherein the median diameter of the plurality of spray droplets created is increased above that of a pesticide spray mixture that does not include the triglyceride fatty acid ester.

7. The method of claim 6, wherein the triglyceride fatty acid ester of Formula III is a vegetable or a seed oil selected from almond oil, canola oil, soybean oil, rape seed oil, olive oil, castor oil, sunflower seed oil, coconut oil, corn oil, cotton seed oil, linseed oil, palm oil, peanut oil, safflower oil, sesame oil, tung oil, or mixtures thereof.

8. The method of any of claims 6 or 7, wherein the pesticide spray mixture contains a herbicide, an insecticide, a fungicide, or mixtures thereof, preferably a herbicide, more preferably an auxinic herbicide.

9. The method of any of claims 6-8, wherein the pesticide spray mixture contains a water soluble salt of 2,4-D, a water soluble salt of aminocyclopyrachlor, a water soluble salt of aminopyralid, a water soluble salt of clopyralid, a water soluble salt of dicamba, a water soluble salt of picloram, a water soluble salt of triclopyr, or mixtures thereof.

10. The method of any of claims 8-9, wherein the aqueous herbicide mixture further comprises an additional herbicide, which preferably is glyphosate or glufosinate.

11. The method of claim 10, wherein the pesticide spray mixture contains a water soluble salt of 2,4-D or a water soluble salt of dicamba and the additional herbicide is glyphosate or glufosinate.

## Patentansprüche

1. Ein Tankmischungsadditiv-Konzentrat umfassend:
von 1 bis 50 Gewichtsprozent der Konzentratmischung eines oberflächenaktiven Mittels, wobei das oberflächenaktive Mittel eine Mischung eines oberflächenaktiven Mittels vom Phosphatestertyp mit einem polymeren oberflächenaktiven Mittel ist, wobei das oberflächenaktive Mittel vom Phosphatestertyp eine Säure oder ein Salz eines Mono- oder Dialkylphosphatesters, eine Säure oder ein Salz eines ethoxylierten Mono- oder Dialkylphosphatesters, eine Säure oder ein Salz eines Mono- oder Dialkylphosphatesters eines ethoxylierten Tristyrolphenols oder eine Säure oder ein Salz eines Mono- oder Dialkylphosphatesters eines ethoxylierten Phenols oder eines ethoxylierten Alkylphenols ist und das polymere oberflächenaktive Mittel ein ABA-Blockcopolymer mit einem hydrophilen Teil von Polyethylenoxid und einem hydrophoben Teil von Poly(12-hydroxystearat), ein Polyvinylalkoholharz, in welchem der Hydrolysegrad 86 - 89 % beträgt, ein Block- oder Pfropfacrylat- oder methacrylatcopolymer, ein Alkyd-Polyethylenoxid-Harz oder ein AB-Blockcopolymer enthaltend EO- und PO-Blöcke ist; und
von 1 bis 90 Gewichtsprozent der Konzentratmischung eines Triglyceridfettsäureesters der Formel III: 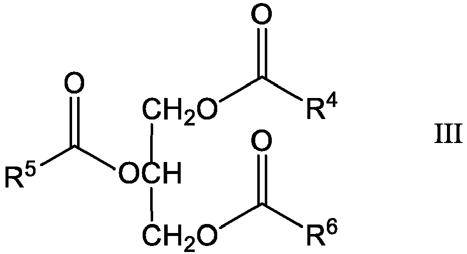
wobei R⁴, R⁵ und R⁶ unabhängig gesättigte oder ungesättigte (C6-C21)-Alkyle darstellen und
wobei das Tankmischungsadditiv-Konzentrat eine stabile Emulsion bei Verdünnung in eine Pestizidsprühmischung bildet.

2. Das Tankmischungsadditiv-Konzentrat gemäß Anspruch 1, wobei der Triglyceridfettsäureester der Formel III ein pflanzliches Öl oder ein Samenöl ausgewählt aus Mandelöl, Canolaöl, Sojaöl, Rapsöl, Olivenöl, Rizinusöl, Sonnenblumenöl, Kokosöl, Maisöl, Baumwollsamenöl, Leinsamenöl, Palmöl, Erdnussöl, Distelöl, Sesamöl, Tungöl oder Mischungen davon ist.

3. Verwendung des Tankmischungsadditiv-Konzentrats gemäß einem der Ansprüche 1 bis 2 zur Verdünnung in einer Pestizidsprühmischung, wobei die Pestizidsprühmischung ein Herbizid, ein Insektizid, ein Fungizid oder Mischungen davon enthält.

4. Die Verwendung gemäß Anspruch 3, wobei die Pestizidsprühmischung ein Herbizid enthält, vorzugsweise ein Herbizid vom Auxintyp, bevorzugter ein wasserlösliches Salz von 2,4-D, ein wasserlösliches Salz von Aminocyclopyrachlor, ein wasserlösliches Salz von Aminopyralid, ein wasserlösliches Salz von Clopyralid, ein wasserlösliches Salz von Dicamba, ein wasserlösliches Salz von Picloram, ein wasserlösliches Salz von Triclopyr oder Mischungen davon.

5. Die Verwendung gemäß einem der Ansprüche 3 oder 4, wobei die Pestizidsprühmischung des Weiteren ein zusätzliches Herbizid umfasst, welches vorzugsweise Glyphosat oder Glufosinat ist, wobei die Pestizidsprühmischung bevorzugter ein wasserlösliches Salz von 2,4-D oder ein wasserlösliches Salz von Dicamba enthält und das zusätzliche Herbizid Glyphosat oder Glufosinat ist.

6. Ein Verfahren zur Verminderung der Sprühabdrift während einer Pestizidsprühanwendung umfassend:
Bereitstellen eines Tankmischungsadditiv-Konzentrats umfassend:
von 1 bis 50 Gewichtsprozent der Konzentratmischung eines oberflächenaktiven Mittels, wobei das oberflächenaktive Mittel eine Mischung eines oberflächenaktiven Mittels vom Phosphatestertyp mit einem polymeren oberflächenaktiven Mittel ist, wobei das oberflächenaktive Mittel vom Phosphatestertyp eine Säure oder ein Salz eines Mono- oder Dialkylphosphatesters, eine Säure oder ein Salz eines ethoxylierten Mono- oder Dialkylphosphatesters, eine Säure oder ein Salz eines Mono- oder Dialkylphosphatesters eines ethoxylierten Tristyrolphenols oder eine Säure oder ein Salz eines Mono- oder Dialkylphosphatesters eines ethoxylierten Phenols oder eines ethoxylierten Alkylphenols ist und das polymere oberflächenaktive Mittel ein ABA-Blockcopolymer mit einem hydrophilen Teil von Polyethylenoxid und einem hydrophoben Teil von Poly(12-hydroxystearat), ein Polyvinylalkoholharz, in welchem der Hydrolysegrad 86 - 89 % beträgt, ein Block- oder Pfropfacrylat- oder methacrylatcopolymer, ein Alkyd-Polyethylenoxid-Harz oder ein AB-Blockcopolymer enthaltend EO- und PO-Blöcke ist; und
von 1 bis 90 Gewichtsprozent der Konzentratmischung eines Triglyceridfettsäureesters der Formel III: 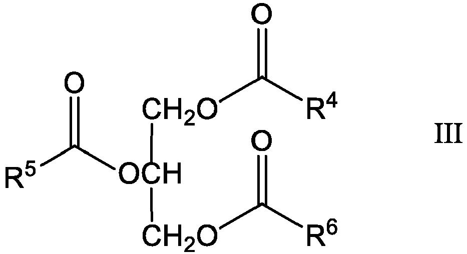
wobei R⁴, R⁵ und R⁶ unabhängig gesättigte oder ungesättigte (C6-C21)-Alkyle darstellen und
wobei das Tankmischungsadditiv-Konzentrat eine stabile Emulsion bei Zugabe zu einer Pestizidsprühmischung bildet;
Hinzugeben des Tankmischungsadditiv-Konzentrats in einen Sprühtank enthaltend die Pestizidsprühmischung; und
Versprühen der Pestizidsprühmischung,
wobei der mittlere Durchmesser der Vielzahl von gebildeten Sprühtropfen gegenüber dem einer Pestizidsprühmischung, welche den Triglyceridfettsäureester nicht enthält, erhöht ist.

7. Das Verfahren gemäß Anspruch 6, wobei der Triglyceridfettsäureester der Formel III ein pflanzliches Öl oder ein Samenöl ausgewählt aus Mandelöl, Canolaöl, Sojaöl, Rapsöl, Olivenöl, Rizinusöl, Sonnenblumenöl, Kokosöl, Maisöl, Baumwollsamenöl, Leinsamenöl, Palmöl, Erdnussöl, Distelöl, Sesamöl, Tungöl oder Mischungen davon ist.

8. Das Verfahren gemäß einem der Ansprüche 6 oder 7, wobei die Pestizidsprühmischung ein Herbizid, ein Insektizid, ein Fungizid oder Mischungen davon enthält, vorzugsweise ein Herbizid, bevorzugter ein Herbizid vom Auxintyp.

9. Das Verfahren gemäß einem der Ansprüche 6 bis 8, wobei die Pestizidsprühmischung ein wasserlösliches Salz von 2,4-D, ein wasserlösliches Salz von Aminocyclopyrachlor, ein wasserlösliches Salz von Aminopyralid, ein wasserlösliches Salz von Clopyralid, ein wasserlösliches Salz von Dicamba, ein wasserlösliches Salz von Picloram, ein wasserlösliches Salz von Triclopyr oder Mischungen davon enthält.

10. Das Verfahren gemäß einem der Ansprüche 8 bis 9, wobei die wässrige Herbizidmischung des Weiteren ein zusätzliches Herbizid umfasst, welches vorzugsweise Glyphosat oder Glufosinat ist.

11. Das Verfahren gemäß Anspruch 10, wobei die Pestizidsprühmischung ein wasserlösliches Salz von 2,4-D oder ein wasserlösliches Salz von Dicamba enthält und das zusätzliche Herbizid Glyphosat oder Glufosinat ist.

## Revendications

1. Concentré d'additifs pour mélange en cuve, comprenant :
- une proportion, rapportée au mélange concentré, de 1 % à 50 % en poids d'un tensioactif, lequel tensioactif est un mélange d'un tensioactif du type ester phosphate avec un tensioactif polymère, étant entendu que le tensioactif du type ester phosphate est un acide ou un sel d'un ester monoalkyl-phosphate ou dialkyl-phosphate, un acide ou un sel d'un ester monoalkyl-phosphate ou dialkyl-phosphate éthoxylé, un acide ou un sel d'un ester monoalkyl-phosphate ou dialkyl-phosphate de tristyrylphénol éthoxylé, ou un acide ou un sel d'un ester monoalkyl-phosphate ou dialkyl-phosphate de phénol éthoxylé ou d'alkyl-phénol éthoxylé, et le tensioactif polymère est un copolymère à blocs ABA comportant une portion hydrophile de poly(oxyde d'éthylène) et une portion hydrophobe de poly(12-hydroxy-stéarate), une résine de poly(alcool vinylique) avec un degré d'hydrolyse de 86 % à 89 %, un copolymère à blocs ou greffé d'acrylate ou de méthacrylate, une résine alkyde de poly(oxyde d'éthylène), ou un copolymère à blocs AB contenant des blocs OE (oxyde d'éthylène) et OP (oxyde de propylène),
- et une proportion, rapportée au mélange concentré, de 1 % à 90 % en poids d'un ester triglycéride d'acide gras répondant à la formule (III) : 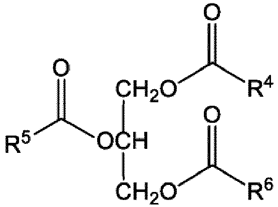 dans laquelle R⁴, R⁵ et R⁶ représentent, indépendamment, des groupes alkyle saturés ou insaturés en C₆-C₂₁,
le concentré d'additifs pour mélange en cuve formant une émulsion stable après dilution au sein d'un mélange pesticide à pulvériser.

2. Concentré d'additifs pour mélange en cuve selon la revendication 1, dans lequel l'ester triglycéride d'acide gras répondant à la formule (III) est une huile végétale ou une huile de graine choisie parmi de l'huile d'amande douce, de l'huile de colza du type canola, de l'huile de soja, de l'huile de colza, de l'huile d'olive, de l'huile de ricin, de l'huile de tournesol, de l'huile de coco, de l'huile de maïs, de l'huile de graine de coton, de l'huile de graine de lin, de l'huile de palme, de l'huile d'arachide, de l'huile de carthame, de l'huile de sésame, de l'huile de bois de Chine et des mélanges de telles huiles.

3. Utilisation d'un concentré pour mélange d'additifs de cuve selon n'importe laquelle des revendications 1 et 2 pour dilution au sein d'un mélange pesticide à pulvériser, le mélange pesticide à pulvériser contenant un herbicide, un insecticide, un fongicide ou des mélanges de telles substances.

4. Utilisation selon la revendication 3, dans laquelle le mélange pesticide à pulvériser contient un herbicide, de préférence un herbicide auxinique, et mieux encore un sel hydrosoluble de 2,4-D, un sel hydrosoluble d'aminocyclopyrachlore, un sel hydrosoluble d'aminopyralide, un sel hydrosoluble de clopyralide, un sel hydrosoluble de dicamba, un sel hydrosoluble de piclorame, un sel hydrosoluble de triclopyr ou des mélanges de tels herbicides.

5. Utilisation selon n'importe laquelle des revendications 3 et 4, dans laquelle le mélange pesticide à pulvériser contient en outre un herbicide supplémentaire qui est, de préférence, du glyphosate ou du glufosinate, et mieux encore, le mélange pesticide à pulvériser contient un sel hydrosoluble de 2,4-D ou un sel hydrosoluble de dicamba, et l'herbicide supplémentaire est du glyphosate ou du glufosinate.

6. Procédé en vue de réduire la dérive pendant l'application de pesticide par pulvérisation, qui comporte les opérations suivantes :
- se procurer un concentré d'additifs pour mélange en cuve comprenant :
- une proportion, rapportée au mélange concentré, de 1 % à 50 % en poids d'un tensioactif, lequel tensioactif est un mélange d'un tensioactif du type ester phosphate avec un tensioactif polymère, étant entendu que le tensioactif du type ester phosphate est un acide ou un sel d'un ester monoalkyl-phosphate ou dialkyl-phosphate, un acide ou un sel d'un ester monoalkyl-phosphate ou dialkyl-phosphate éthoxylé, un acide ou un sel d'un ester monoalkyl-phosphate ou dialkyl-phosphate de tristyrylphénol éthoxylé, ou un acide ou un sel d'un ester monoalkyl-phosphate ou dialkyl-phosphate de phénol éthoxylé ou d'alkyl-phénol éthoxylé, et le tensioactif polymère est un copolymère à blocs ABA comportant une portion hydrophile de poly(oxyde d'éthylène) et une portion hydrophobe de poly(12-hydroxy-stéarate), une résine de poly(alcool vinylique) avec un degré d'hydrolyse de 86 % à 89 %, un copolymère à blocs ou greffé d'acrylate ou de méthacrylate, une résine alkyde de poly(oxyde d'éthylène), ou un copolymère à blocs AB contenant des blocs OE et OP,
- et une proportion, rapportée au mélange concentré, de 1 % à 90 % en poids d'un ester triglycéride d'acide gras répondant à la formule (III) : 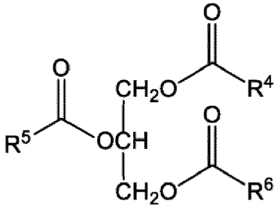
dans laquelle R⁴, R⁵ et R⁶ représentent, indépendamment, des groupes alkyle saturés ou insaturés en C₆-C₂₁,
le concentré d'additifs pour mélange en cuve formant une émulsion stable après dilution au sein d'un mélange pesticide à pulvériser,
- ajouter le concentré d'additifs pour mélange en cuve dans une cuve de pulvérisation contenant le mélange pesticide à pulvériser,
- et pulvériser le mélange pesticide à pulvériser,
le diamètre médian de la pluralité des gouttelettes de pulvérisation ainsi générées étant plus élevé que celui d'un mélange pesticide à pulvériser qui ne contient pas l'ester triglycéride d'acide gras.

7. Procédé selon la revendication 6, dans lequel l'ester triglycéride d'acide gras répondant à la formule (III) est une huile végétale ou une huile de graine choisie parmi de l'huile d'amande douce, de l'huile de colza du type canola, de l'huile de soja, de l'huile de colza, de l'huile d'olive, de l'huile de ricin, de l'huile de tournesol, de l'huile de coco, de l'huile de maïs, de l'huile de graine de coton, de l'huile de graine de lin, de l'huile de palme, de l'huile d'arachide, de l'huile de carthame, de l'huile de sésame, de l'huile de bois de Chine et des mélanges de telles huiles.

8. Procédé selon n'importe laquelle des revendications 6 et 7, dans lequel le mélange pesticide à pulvériser contient un herbicide, un insecticide, un fongicide ou des mélanges de telles substances, de préférence un herbicide, et mieux encore un herbicide auxinique.

9. Procédé selon n'importe lesquelles des revendications 6 à 8, dans lequel le mélange pesticide à pulvériser contient un sel hydrosoluble de 2,4-D, un sel hydrosoluble d'aminocyclopyrachlore, un sel hydrosoluble d'aminopyralide, un sel hydrosoluble de clopyralide, un sel hydrosoluble de dicamba, un sel hydrosoluble de piclorame, un sel hydrosoluble de triclopyr ou des mélanges de tels herbicides.

10. Procédé selon n'importe laquelle des revendications 8 et 9, dans lequel le mélange herbicide aqueux contient en outre un herbicide supplémentaire, qui est de préférence du glyphosate ou du glufosinate

11. Procédé selon la revendication 10, dans lequel le mélange pesticide à pulvériser contient un sel hydrosoluble de 2,4-D ou un sel hydrosoluble de dicamba, et l'herbicide supplémentaire est du glyphosate ou du glufosinate.
